# EUROPÄISCHE PATENTSCHRIFT

(11) **EP 3 599 448 B1**
(45) Veröffentlichungstag und Bekanntmachung des Hinweises auf die Patenterteilung: **14.06.2023**
(21) Anmeldenummer: 18186158.4
(22) Anmeldetag: 27.07.2018
(51) Int. Cl.: G01J 3/46

(54) **VERFAHREN UND DATENVERARBEITUNGSVORRICHTUNG ZUM ERMITTELN EINES FARBREZEPTUR**
METHOD AND DATA PROCESSING DEVICE FOR DETERMINING A COLOR RECIPE
PROCÉDÉ ET DISPOSITIF DE TRAITEMENT DE DONNÉES POUR DÉTERMINER UNE RECETTE DE COULEUR

(43) Veröffentlichungstag der Anmeldung: 29.01.2020
(73) Patentinhaber: hubergroup Deutschland GmbH, 85551 Kirchheim-Heimstetten (DE)
(72) Erfinder: HÜBEL, Patrick, 85586 Poing (DE); CARNELLI, Carlo, 21047 Saronno Va (IT)
(74) Vertreter: Henkel & Partner mbB

(56) Entgegenhaltungen:
- EP-A1- 1 248 087
- EP-A2- 0 527 108
- JP-A- H08 256 836
- RU-C1- 2 637 914
- US-A1- 2006 012 810
- US-A1- 2006 062 441
- US-A1- 2009 180 164
- US-A1- 2010 067 056

## Beschreibung

Die vorliegende Erfindung betrifft ein Verfahren zum Ermitteln einer Farbrezeptur, welche nach der Applikation mit einem vorgegebenen Applikationsverfahren, wie z. B. einem Flachdruckverfahren, auf ein vorgegebenes Substrat, wie z. B. Papier, ein Farbprodukt, wie z.B. bedrucktes Papier, mit einem vorgegebenen Farbton ergibt.

Derartige Systeme und Verfahren werden für verschiedenste Anwendungen eingesetzt, wie unter anderem in der Verpackungsentwicklung. Beispielsweise wird bei der Entwicklung einer Verpackung, wie zum Beispiel einer Lebensmittelverpackung, eine neue, farblich anspruchsvolle, mehrere Farben umfassende Gestaltung kreiert, deren exakte Herstellung es erfordert, dass die von dem Verpackungsentwickler vorgegebenen Farben bei dem Bedrucken der Verpackung mit den zur Wiedergabe der verschiedenen Farben eingesetzten Farbrezepturen exakt verwirklicht werden. Allerdings hängt der nach der Applikation einer Farbrezeptur mit einem Applikationsverfahren, also im Falle von Drucken der nach dem Drucken einer Druckfarbe auf ein Substrat erzielte Farbton von einer Vielzahl von Faktoren ab, wie insbesondere von der konkreten Art des Substrats und von dem eingesetzten Applikationsverfahren. Das Drucken einer Druckfarbe mit Flexodruck auf Pappe kann zu einem Druckprodukt mit einem signifikant anderen Farbton führen als beispielsweise das Drucken derselben Druckfarbe mit einem Tiefdruckverfahren auf gestrichenes Papier. Eine bekannte, den von dem Verpackungsentwickler geforderten Farbton ergebende Tiefdruckfarbe für Papier wird daher in der Regel auf die gewünschte Verpackungspappe mit einem Tiefdruckverfahren aufgebracht nicht zu dem gewünschten Farbton führen. Es muss daher eine den gewünschten Farbton ergebende Druckfarbe jeweils für das spezielle Substrat und das gewünschte Druckverfahren gefunden werden, oder, falls noch nicht vorhanden, entwickelt werden.

Neben dem sich nach der Applikation auf das Zielsubstrat mit dem vorgegebenen Applikationsverfahren ergebenden Wunschfarbton muss die für eine neue Anwendung, wie beispielsweise für eine neue Verpackung geeignete Farbrezeptur noch eine Vielzahl anderer Kriterien erfüllen. Je nach Anwendungszweck muss die Farbrezeptur beispielsweise einen vorgegebenen Glanzwert ergeben sowie sich durch eine mehr oder weniger ausgeprägte Chemikalienbeständigkeit oder eine mehr oder weniger ausgeprägte Beständigkeit gegenüber Licht auszeichnen, um nur einige der geforderten Anforderungen zu nennen.

Um es den Verpackungsentwicklern und anderen Anwendern trotz dieser komplexen Zusammenhänge zu erleichtern, für ein konkretes System eine geeignete Farbrezeptur zu finden, sind bereits Datenbanken und Computerprogramme entwickelt worden, die es einem Benutzer erlauben, gewünschte Zielparameter vorzugeben, wie den Zielfarbton, das Substrat, das Applikationsverfahren, mit dem die Farbrezeptur auf das Substrat aufgebracht werden soll, die geforderte Chemikalienbeständigkeit des nach der Applikation der Farbrezeptur auf das Substrat erhaltenen Farbprodukts und andere Parameter. Das Computerprogramm durchsucht dann die Datenbank nach einer geeigneten Farbrezeptur und zeigt diejenige Farbrezeptur an, die gemäß den in der Datenbank gespeicherten Informationen nach dem Aufbringen auf das Zielsubstrat mit dem vorgegebenen Applikationsverfahren ein Farbprodukt mit einem Farbton ergibt, der am nächsten an den geforderten Zielfarbton herankommt. Hierzu enthält die Datenbank eine Vielzahl von Datensätzen, wobei jeder Datensatz Informationen über eine Farbrezeptur, über ein Substrat, über ein Applikationsverfahren und über den Farbton des sich nach der Applikation der in dem Datensatz gespeicherten Farbrezeptur mit dem in dem Datensatz gespeicherten Applikationsverfahren auf das in dem Datensatz gespeicherte Substrat ergebenden Farbprodukts umfasst und ggf. Informationen zu weiteren Parametern, wie beispielsweise zu der Chemikalienbeständigkeit. Falls keine Farbrezeptur gefunden wird, die zumindest annähernd den gewünschten Zielfarbton ergibt, wird dem Benutzer angezeigt, dass kein Treffer gefunden wurde.

Ein solches Verfahren und System wird beispielsweise unter dem Handelsnamen PantoneLIVE vertrieben.

Aus der US 7,034,960 B2 ist ein Verfahren zum Verwenden einer Datenbank zum Entwickeln eines Farbprodukts bekannt, wobei das Verfahren die folgenden Schritte umfasst: i) Speichern von Entwicklungsinformationen in der Datenbank, wobei die Entwicklungsinformationen Eigenschaften bezogen auf die Entwicklung einer Vielzahl von Farbprodukten umfassen, ii) Empfangen von ersten Farbinformationen, welche wenigstens eine erste Farbe umfasst, iii) Identifizieren von ersten Entwicklungsinformationen in der Datenbank, wobei die ersten Entwicklungsinformationen wenigstens die erste Farbe umfassen, iv) Empfangen von wenigstens einer physikalischen Eigenschaft des Farbprodukts und v) Verwenden der ersten Entwicklungsinformationen zum Bestimmen, ob die wenigstens eine physikalische Eigenschaft mit der ersten Farbe kompatibel ist. Wenn die wenigstens eine physikalische Eigenschaft nicht mit der ersten Farbe kompatibel ist, wird das Verfahren entweder beendet oder es wird dem Benutzer eine Warnung angezeigt, dass wenigstens eine physikalische Eigenschaft nicht mit der ersten Farbe kompatibel ist. Der Benutzer kann dann seine gewünschte Gestaltung bzw. die Anforderungen an das Farbprodukt ändern, und zwar so oft, bis in der Datenbank ein entsprechender Treffer für eine Farbrezeptur gefunden wird. Letzteres ist jedoch keine befriedigende Lösung, da der Benutzer in diesem Fall nicht eine das von vornherein gewünschte Farbprodukt ergebende Farbrezeptur erhält

US 2006/012810 A1 offenbart ein System und ein Verfahren zum elektronischen Herstellen von farbigen Materialien und zum Bestimmen von Farbtintenrezepten, um Tinten zu erzeugen, die eine vorgegebene Farbe auf zwei oder mehr bestimmten Substraten oder Materialien aufweisen.

Ein Nachteil der bekannten Verfahren ist es, dass diese Datenbanken verwenden, die vergleichsweise redundant sind, d.h. die eine Vielzahl verschiedener Datensätze für die gleichen oder sehr ähnliche Informationen umfassen. Wenn beispielsweise ein Benutzer einen neuen Datensatz eingibt, der eine Farbrezeptur betrifft, die zu einer bereits in einem anderen Datensatz gespeicherten Farbrezeptur nahezu identisch ist, gar identisch ist oder dieser zumindest sehr ähnlich ist, wird dieser neue Datensatz dennoch gespeichert, selbst wenn dieser Datensatz Informationen über dasselbe Substrat und dasselbe Applikationsverfahren und somit auch über denselben oder nahezu identischen sich für das Farbprodukt ergebenden Farbton umfasst wie der bereits gespeicherte Datensatz. Dabei gilt es zu berücksichtigen, dass das menschliche Auge minimalste Unterschiede zwischen zwei nahezu identischen Farbtönen nicht wahrnehmen kann, so dass zwei nahezu identische Farbtöne, die sich ergeben, wenn sich nur minimal unterscheidende Farbrezepturen mit demselben Applikationsverfahren auf dasselbe Substrat appliziert werden, in der Regel für das menschliche Auge nicht unterscheidbar sind. Die Datenbank enthält dann zwei oder mehr Datensätze, welche Informationen über eine nahezu identische oder sehr ähnliche Farbrezepturen, identische Informationen über das Substrat sowie das Applikationsverfahren und nahezu identische oder sehr ähnliche Informationen über die sich nach Applikation der Farbrezepturen mit dem Applikationsverfahren auf das Substrat jeweils ergebende Farbtöne, die für das menschliche Auge nicht unterscheidbar sind, enthalten. Dieses Vorhandensein einer Vielzahl von Datensätzen, welche nahezu identische oder sehr ähnliche Informationen enthalten, ist jedoch für den Benutzer des Verfahrens nachteilhaft, der eine Vielzahl der in der Datenbank gespeicherten Farbrezepturen für ein oder mehrere Projekte verwenden will. Dies deshalb, weil der Benutzer oder das von dem Benutzer mit der Herstellung der Farbrezepturen beauftragte Unternehmen, wie beispielsweise der Betreiber der Datenbank, für jede der zu verwendenden nahezu identischen oder sehr ähnlichen Farbrezepturen eine eigene Produktionsvorschrift, eine eigene Qualitätskontrollvorschrift und Lagerplatz für die Bestandteile der Farbrezepturen und für die hergestellten Farbrezepturen bereitstellen muss. Ein weiterer Nachteil der redundanten Datensätze ist es, dass die hinsichtlich der Farbrezeptur, des Substrats, des Applikationsverfahrens und des sich nach der Applikation der Farbrezeptur mit dem Applikationsverfahren auf das Substrat ergebenden Farbtons identischen oder nahezu identischen Datensätze hinsichtlich anderer Parameter, wie Chemikalienbeständigkeit oder Temperaturbeständigkeit, beispielsweise aufgrund der Verwendung von verschieden Messverfahren zur Bestimmung dieser Parameter bei den in den verschiedenen Datensätzen enthaltenen Informationen, aufgrund von Rundungsfehlern von in Messungen erhaltenen Zahlenwerten oder aufgrund von Eingabefehler(n) eines Benutzers voneinander abweichen können. Dann widersprechen sich zwei nahezu identische oder gar identische Farbrezepturen betreffende Datensätze hinsichtlich der in den Datensätzen über die Eigenschaften der Farbrezepturen gespeicherten Informationen oder weichen zumindest voneinander ab. Aus all diesen Gründen decken die bekannten Verfahren bezogen auf die Anzahl der darin enthaltenen Datensätze vergleichsweise wenig Varianten der Vielzahl an Varianten aus der aus Farbton, aus Substrat, aus Farbrezeptur und aus Applikationsverfahren bestehenden Matrix ab. Ein weiterer Nachteil der bekannten Verfahren ist es, dass die Datensätze, welche identische oder nahezu identische Farbrezepturen betreffen oder sich für das Farbprodukt ergebende identische oder nahezu identische Farbtöne betreffen, untereinander nicht so verknüpft sind, dass ein Fachmann sich mehrere solche Datensätze anzeigen kann.

Ausgehend davon lag der vorliegenden Erfindung die Aufgabe zugrunde, ein Verfahren zum Ermitteln einer Farbrezeptur bereitzustellen, welches nach der Applikation mit einem vorgegebenen Applikationsverfahren auf ein vorgegebenes Substrat ein Farbprodukt mit einem vorgegebenen Farbton ergibt, und, welches es erlaubt, mit einer möglichst geringen Anzahl von in der Datenbank enthaltenen Datensätzen eine möglichst große Zahl von Varianten der aus Farbton, Substrat, Farbrezeptur und Applikationsverfahren bestehenden Matrix abzudecken. Mit anderen Worten ist es das Ziel der vorliegenden Erfindung, ein entsprechendes Verfahren zur Verfügung zu stellen, mit dem ein Benutzer eine möglichst hohe Wahrscheinlichkeit dafür hat, dass dieses ihm für ein von ihm vorgegebenes Zielapplikationsverfahren, ein von ihm vorgegebenes Zielsubstrat sowie einen von ihm vorgegebenen Zielfarbton eine geeignete Farbrezeptur anzeigt, mit der er nach der Applikation der Farbrezeptur mit dem vorgegebenen Zielapplikationsverfahren auf das vorgegebene Zielsubstrat ein Farbprodukt mit dem vorgegebenen Zielfarbton erhält, wobei das System sowie Verfahren eine Datenbank nutzt, welche eine möglichst geringe Anzahl an verschiedenen Farbrezepturen enthält.

Erfindungsgemäß wird diese Aufgabe gelöst durch ein Verfahren zum Ermitteln einer Farbrezeptur wie im beigefügten Anspruchssatz dargelegt.

Unter zwei oder mehr gleichen Farbtönen wird im Sinne der vorliegenden Patentanmeldung verstanden, dass die zwei oder mehr Farbtöne unter dem demselben Licht betrachtet, vorzugsweise unter demselben Normlicht gemäß ISO 3664, oder beispielsweise unter den Messbedingungen M0, M1, M2 oder M3 gemessen, mit dem menschlichen Auge nicht unterscheidbar sind. Insbesondere wird unter zwei oder mehr gleichen Farbtönen verstanden, dass die zwei oder mehr Farbtöne voneinander um einen Delta E-Wert (der den Gesamtfarbabstand wiedergibt) von nicht mehr als 0,5, bevorzugt um einen ΔE₀₀-Wert von nicht mehr als 0,5 und vorzugsweise um einen dH* (der den Farbwinkelabstand wiedergibt) von maximal 0,5, besonders bevorzugt einen dH* von maximal 0,2 abweichen. Die Parameter ΔE und dH* sind in der DIN EN ISO 11664-6:2014 definiert.

Analog dazu werden unter zwei oder mehr gleichen Farbrezepturen im Sinne der vorliegenden Patentanmeldung Farbrezepturen verstanden, welche die gleichen farbgebenden Bestandteile aufweisen und bezüglich der Mengen der einzelnen farbgebenden Bestandteile voneinander um maximal 0,5% pro farbgebenden Bestandteil abweichen. Mithin werden gemäß der vorliegenden Patentanmeldung zwei oder mehr Farbrezepturen als verschieden betrachtet, wenn diese wenigstens einen verschiedenen farbgebenden Bestandteil aufweisen oder, wenn diese die gleichen farbgebenden Bestandteile aufweisen, bezüglich der Mengen der einzelnen farbgebenden Bestandteile voneinander um mehr als 0,5% pro Bestandteil abweichen. Unter Bestandteil wird dabei eine Einzelkomponente (also ein Rohstoff) der Farbrezeptur oder ein in der Farbrezeptur enthaltendes Halbfertigprodukt oder ein in der Farbrezeptur enthaltendes Fertigprodukt verstanden. Ferner wird unter einem farbgebenden Bestandteil ein Bestandteil verstanden, dessen Zusatz den Farbton der Farbrezeptur verändert. Hingegen werden Bestandteile, deren Zusatz den Farbton der Farbrezeptur nicht verändern, als farbneutral bezeichnet.

Indem die eingesetzte Datenbank verschiedene, jeweils die gleiche Farbrezeptur betreffende Datensätze umfasst, für die jeweils nach dem Applizieren der in den Datensätzen gespeicherten gleichen Farbrezeptur mit den in den jeweiligen Datensätzen gespeicherten Applikationsverfahren auf die in den jeweiligen Datensätzen gespeicherten Substrat Farbprodukte mit einem jeweils verschiedenen Farbton erhalten werden, und jeder dieser Datensätze jeweils den gleichen Farbrezepturidentifikationscode, beispielsweise ein Code aus Zahlen und/oder Buchstaben, enthält, kann es zuverlässig verhindert werden, dass die Datenbank unnötig redundante Datensätze enthält, d.h. eine Vielzahl verschiedener Datensätze für die gleichen oder für sehr ähnliche Informationen.

Wenn nämlich ein Benutzer einen neuen Datensatz anlegt, muss die Datenbank einen Farbrezepturidentifikationscode vergeben. In diesem Zusammenhang prüft der Benutzer oder vorzugsweise das die Dateneingabe in die Datenbank betreibende Computerprogramm automatisch, ob für die Farbrezeptur, über die in dem neu anzulegenden Datensatz Informationen gespeichert werden sollen, bereits innerhalb des vorgenannten Toleranzbereiches (d.h. die gleichen farbgebenden Bestandteile aufweisend und bezüglich der Mengen der einzelnen farbgebenden Bestandteile um maximal 0,5% pro Bestandteil abweichend) mindestens ein Datensatz enthalten ist oder nicht. Falls nein, wird der neue Datensatz angelegt und in diesem ein neu vergebener Farbrezepturidentifikationscode gespeichert. Falls ja, wird des Weiteren geprüft, ob der mindestens eine Datensatz Informationen über dasselbe Substrat, über dasselbe Applikationsverfahren und über den gleichen sich nach der Applikation der Farbrezeptur mit dem Applikationsverfahren auf das Substrat ergebenden Farbton enthält. Wenn ja, erhält der Benutzer eine Mitteilung, dass in der Datenbank bereits ein entsprechender Datensatz enthalten ist und, je nach Ausführungsform, wird dann der anzulegende Datensatz nicht angelegt oder nur, wenn der Benutzer bestätigt, dass er dennoch angelegt werden soll. Wenn nein, also falls in der Datenbank mindestens ein Datensatz für die Farbrezeptur gefunden wurde, dieser aber nicht Informationen über dasselbe Substrat, über dasselbe Applikationsverfahren und über den gleichen Farbton enthält, werden in dem neu anzulegenden Datensatz derselbe Farbrezepturidentifikationscode, also dieselben Informationen über die Farbrezeptur, gespeichert wie in dem wenigstens einen bereits gespeicherten Datensatz sowie auch dieselben unmittelbar mit der Farbrezeptur verbundenen Parameter, Beispielsweise hängt die UV-Beständigkeit, Temperaturbeständigkeit oder Chemikalienbeständigkeit der Farbrezeptur nur von der Farbrezeptur selbst ab. Daher werden in allen Datensätzen, die denselben Farbrezepturidentifikationscode aufweisen, für die unmittelbar mit der Farbrezeptur verbundenen Parameter dieselben Informationen gespeichert. Dies kann beispielsweise einfach dadurch geschehen, dass diese Datensätze für diese Parameter auf eine diese Farbrezeptur betreffende Tabelle zugreifen, in der alle Informationen über die unmittelbar mit der Farbrezeptur verbundenen Parameter gespeichert sind. Auf diese Weise wird nicht nur sichergestellt, dass die Datenbank nicht zwei oder mehr Datensätze enthält, welche Informationen über nahezu identische oder sehr ähnliche Farbrezepturen, identische Informationen über das Substrat sowie das Applikationsverfahren und nahezu identische oder sehr ähnliche Informationen über die sich nach Applikation der Farbrezepturen mit dem Applikationsverfahren auf das Substrat jeweils ergebende Farbtöne, die für das menschliche Auge nicht unterscheidbar sind, enthalten. Zudem wird dadurch zuverlässig vermieden, dass die dieselbe Farbrezeptur betreffenden Datensätze hinsichtlich der über die unmittelbar mit der Farbrezeptur verbundenen Parameter, wie Chemikalienbeständigkeit oder Temperaturbeständigkeit der Farbrezeptur, unterschiedliche Informationen enthalten. So wird nicht nur eine hohe Datenqualität sichergestellt, sondern insbesondere auch erreicht, dass derjenige Benutzer des Verfahrens, der eine Vielzahl der in der Datenbank gespeicherten Farbrezepturen für ein oder mehrere Projekte verwenden will, mit einer vergleichsweise geringen Anzahl von verschiedenen Farbrezepturen auskommt. Dies ist deshalb vorteilhaft, weil der Benutzer oder das von dem Benutzer mit der Herstellung der Farbrezepturen beauftragte Unternehmen für jede der zu verwendenden nahezu identischen oder sehr ähnlichen Farbrezepturen, welche erfindungsgemäß durch eine Farbrezeptur ersetzt werden, jeweils eine eigene Produktionsvorschrift, eine eigene Qualitätskontrollvorschrift und Lagerplatz für die Bestandteile der Farbrezepturen und für die hergestellten Farbrezepturen bereitstellen müsste. Aus all diesen Gründen deckt das erfindungsgemäße Verfahren bezogen auf die Anzahl der darin enthaltenen Datensätze eine sehr große Anzahl an Varianten aus der aus Farbton, aus Substrat, aus Farbrezeptur und aus Applikationsverfahren bestehenden Matrix ab.

Ein weiterer Vorteil des erfindungsgemäßen Verfahren ist es, dass durch die Vergabe von gleichen Farbtonidentifikationscodes für Datensätze, welche zu Farbprodukten mit innerhalb des Toleranzbereichs liegend gleichen Farbtönen führen, sowie durch die Vergabe von gleichen Farbrezepturidentifikationscodes für Datensätze, welche innerhalb des Toleranzbereichs liegend gleiche Farbrezepturen betreffen, sowohl diejenigen Datensätze untereinander verknüpft sind, welche identische oder nahezu identische Farbrezepturen betreffen, als auch diejenigen Datensätze untereinander verknüpft sind, welche Farbprodukte mit identischen oder nahezu identischen Farbtönen ergeben. Dies hat den Vorteil, dass sich ein Benutzer, der für eines seiner Produkte für alle von ihm vertriebenen Verpackungen unabhängig von dem eingesetzten Substrat denselben Farbton, wie beispielsweise einen speziellen Blauton realisieren will, alle Datensätze anzeigen lassen kann, welche diesen Farbton ergeben. So kann er eine Farbrezeptur ermitteln, mit der er diesen speziellen Blauton auf Metall erzielen kann, eine Farbrezeptur ermitteln, mit der er diesen speziellen Blauton auf einer Lebensmittelverpackungspappe erzielen kann und/oder eine Farbrezeptur ermitteln, mit der er diesen speziellen Blauton auf einer Polypropylenfolie erzielen kann. Ohne die Vergabe jeweils desselben Farbtonidentifikationscodes für Datensätze, welche zu innerhalb des Toleranzbereichs liegend gleichen Farbtönen führen, wäre dies nicht möglich, da der Benutzer in dem Computerprogramm dann nur nach einem ganz speziellen Lab-Werten entsprechenden Farbton betreffenden Datensätzen suchen könnte, nicht aber nach allen Datensätzen, die einen Farbton ergeben, der mit dem menschlichen Auge nicht von dem Zielfarbton unterscheidbar ist. Gleichermaßen kann sich der Benutzer mit dem erfindungsgemäßen Verfahren durch die Vergabe von gleichen Farbrezepturidentifikationscodes für Datensätze, welche innerhalb des Toleranzbereichs liegend gleiche Farbrezepturen betreffen, alle eine innerhalb eines Toleranzbereichs liegend gleiche Farbrezeptur betreffenden Datensätze anzeigen lassen und kann so mit wenig Aufwand ermitteln, für wie viele verschiedener seiner Projekte er eine bestimmte Farbrezeptur einsetzen kann.

Dies gibt dem Benutzer eine bessere Entscheidungsbasis darüber, ob es sich für ihn lohnt, größere Mengen dieser Farbrezeptur in einer Produktionscharge herzustellen, ohne dass die Lagerzeit bis zum endgültigen Verbrauch der Produktionscharge unwirtschaftlich lang wird.

Erfindungsgemäß umfasst die Datenbank für mindestens einen Farbton jeweils mindestens zwei verschiedene Datensätze, wobei unter zwei oder mehr gleichen Farbtönen verstanden wird, dass die zwei oder mehr Farbtöne unter dem demselben Licht betrachtet, vorzugsweise unter demselben Normlicht gemäß ISO 3664 oder beispielsweise unter den Messbedingungen M0, M1, M2 oder M3 gemessen, mit dem menschlichen Auge nicht unterscheidbar sind und insbesondere voneinander um einen Delta E-Wert von nicht mehr als 0,5 abweichen. Als Delta E-Werte können alle gängigen Delta E-Werte eingesetzt werden, wie beispielsweise der ΔE*_{ab}, der ΔE94, der ΔE₀₀, der DIN99, der DIN99ₒ, der CMC, der Lübbe, der Lübbe korrigiert, der CIECAM02. Vorzugsweise wird der ΔE₀₀ eingesetzt. Grundsätzlich gilt, dass zwei verschiedene Farbtöne mit einer Abweichung des ΔE₀₀-Wertes von bis zu 1 einer sehr kleinen Farbtonabweichung entspricht, die nur von einem geschulten Auge erkennbar ist. Abweichungen in dem ΔE₀₀-Wert von bis zu 0,5 gelten als normalerweise nicht sichtbar und Abweichungen in dem ΔE₀₀-Wert von bis zu 0,2 sind auch von einem geschulten Auge nicht mehr erkennbar.

Bevorzugt umfasst die Datenbank für mindestens einen Farbton jeweils mindestens zwei verschiedene Datensätze, wobei unter zwei oder mehr gleichen Farbtönen verstanden wird, dass die zwei oder mehr Farbtöne unter dem demselben Licht betrachtet, vorzugsweise unter demselben Normlicht gemäß ISO 3664 oder beispielsweise unter den Messbedingungen M0, M1, M2 oder M3 gemessen, voneinander um einen ΔE₀₀-Wert von nicht mehr als 0,5 und besonders bevorzugt voneinander um einen ΔE₀₀-Wert von nicht mehr als 0,2 abweichen. Hingegen werden zwei Farbtöne als verschieden voneinander bewertet, wenn diese voneinander um einen Delta E-Wert von mehr als 0,5 abweichen und bevorzugt um einen ΔE₀₀-Wert von mehr als 0,5 abweichen. Vorzugsweise weichen die zwei oder mehr Farbtöne unter dem demselben Licht betrachtet um einen dH* von maximal 0,5 und besonders bevorzugt um einen dH* von maximal 0,2 ab.

Um die Vorteile der vorliegenden Erfindung besonders gut zu nutzen, wird es in Weiterbildung des Erfindungsgedankens vorgeschlagen, dass die Datenbank für wenigstens 10%, bevorzugt für wenigstens 20%, besonders bevorzugt für wenigstens 50%, weiter bevorzugt für wenigstens 70%, ganz besonders bevorzugt für wenigstens 90% und höchst bevorzugt für alle Farbtöne jeweils mindestens zwei verschiedene Datensätze umfasst, welche jeweils denselben Farbtonidentifikationscode und Informationen über voneinander verschiedene Farbrezepturen, über ein Substrat sowie über ein Applikationsverfahren umfassen, wobei sich das Substrat und/oder Applikationsverfahren von jedem der mindestens zwei verschiedenen Datensätze von dem Substrat und/oder Applikationsverfahren von jedem anderen der mindestens zwei verschiedenen Datensätze unterscheidet, wobei für jede der voneinander verschiedenen Farbrezepturen der mindestens zwei verschiedenen Datensätze nach der Applikation der jeweiligen Farbrezeptur mit dem in dem jeweiligen Datensatz gespeicherten Applikationsverfahren auf das in dem jeweiligen Datensatz gespeicherte Substrat jeweils ein Farbprodukt mit dem gleichen Farbton erhalten wird.

Bei der vorstehend beschriebenen Ausführungsform ist es insbesondere bevorzugt, dass die Datenbank für den mindestens einen Farbton jeweils mindestens zwei verschiedene, bevorzugt mindestens sechs verschiedene, besonders bevorzugt mindestens zehn verschiedene und ganz besonders bevorzugt mindestens zwanzig verschiedene Datensätze umfasst, welche jeweils denselben Farbtonidentifikationscode und Informationen über voneinander verschiedene Farbrezepturen, über ein Substrat sowie über ein Applikationsverfahren umfassen, wobei sich das Substrat und/oder Applikationsverfahren von jedem der mindestens vier verschiedenen Datensätze von dem Substrat und/oder Applikationsverfahren von jedem anderen der mindestens vier verschiedenen Datensätze unterscheidet, wobei für jede der voneinander verschiedenen Farbrezepturen der mindestens vier verschiedenen Datensätze nach der Applikation der jeweiligen Farbrezeptur mit dem in dem jeweiligen Datensatz gespeicherten Applikationsverfahren auf das in dem jeweiligen Datensatz gespeicherte Substrat jeweils ein Farbprodukt mit dem gleichen Farbton erhalten wird.

Dabei ist es bevorzugt vorgesehen, dass jeder Datensatz, für welchen nach der Applikation der in dem jeweiligen Datensatz gespeicherten Farbrezeptur mit dem in dem jeweiligen Datensatz gespeicherten Applikationsverfahren auf das in dem jeweiligen Datensatz gespeicherte Substrat ein Farbprodukt mit einem von dem für mindestens einen anderen Datensatz erhaltenen verschiedenen Farbton erhalten wird, ein anderer Farbtonidentifikationscode gespeichert ist als in allen anderen des mindestens einen anderen Datensatzes. In diesem Zusammenhang wird unter zwei oder mehr verschiedenen Farbtönen wiederum Farbtöne verstanden, welche - unter dem demselben Licht betrachtet, und zwar vorzugsweise unter demselben Normlicht betrachtet, wie beispielsweise unter dem Normlicht gemäß ISO 3664 oder beispielsweise unter den Messbedingungen M0, M1, M2 oder M3 gemessen - voneinander um einen Delta E-Wert von mehr als 0,5 abweichen und bevorzugt um einen ΔE₀₀-Wert von mehr als 0,5 abweichen.

Bei dem in jedem der Datensätze gespeicherten Farbtonidentifikationscode kann es sich insbesondere um einen Zahlen- und/oder Buchstabencode oder um einen Text handeln.

Bei den in den Datensätzen gespeicherten Informationen über den Farbton kann es sich um jede Art von Information handeln welche es erlaubt, den Farbton zu charakterisieren und von anderen Farbtönen zu unterscheiden. Gemäß einer besonders bevorzugten Ausführungsform der vorliegenden Erfindung handelt es sich bei den Informationen über den Farbton um die Daten einer Spektralkurve, die erhalten worden ist, indem die in dem jeweiligen Datensatz gespeicherte Farbrezeptur mit dem in dem jeweiligen Datensatz gespeicherten Applikationsverfahren auf das in dem jeweiligen Datensatz gespeicherte Substrat appliziert worden ist und dann von der Oberfläche des so erhaltenen Farbprodukts mit einem Spektrophotometer über einen Wellenlängenbereich von 180 bis 4.000 nm eine Spektralkurve aufgenommen worden ist. Bei der aufgenommenen Spektralkurve handelt es sich besonders bevorzugt um eine über einen Wellenlängenbereich von 400 bis 700 nm aufgenommene spektrale Reflexionskurve. Dabei kann die spektrale Reflexionskurve so aufgenommen werden, dass die Gesamtreflexion, die Totalreflexion, die diffuse Reflexion oder die gerichtete Reflexion gemessen wird. Vorzugsweise wird das Lichtspektrum in einem ersten Winkel auf das zu vermessende Farbprodukt aufgestrahlt und die Reflexion mit einem Sensor unter einem zweiten Winkel gemessen. Beispielsweise kann die Lichtquelle das Lichtspektrum in einem Winkel von 45° auf das Farbprodukt einstrahlen und der Sensor die Reflexion bei 0° messen, wobei beide Winkel in Bezug auf die Vertikale, d.h. die zu der Farbproduktoberfläche senkrechte Ebene, gemeint sind, also 0° der Vertikalen entspricht. Alternativ dazu kann die Lichtquelle das Lichtspektrum in einem Winkel von 0° auf das Farbprodukt einstrahlen und der Sensor die Reflexion bei 45° messen oder kann die Lichtquelle das Lichtspektrum diffus auf das Farbprodukt einstrahlen und der Sensor die Reflexion bei 0°, 8° oder irgendeinem anderen Winkel messen. Die Daten der Spektralkurve können bei dieser Ausführungsform der vorliegenden Erfindung die Reflexionswerte für jeden Nanometer in dem gemessenen Wellenlängenbereich sein, die Reflexionswerte für jeden fünften Nanometer in dem gemessenen Wellenlängenbereich sein, die Reflexionswerte für jeden zehnten Nanometer in dem gemessenen Wellenlängenbereich sein oder die Reflexionswerte in anderen Abständen.

Gemäß einer dazu alternativen Ausführungsform der vorliegenden Erfindung kann es sich bei den Informationen über den Farbton auch um die Werte in einem Farbraum handeln, welche dem Farbton entsprechen. Vorzugsweise sind die Informationen über den Farbton gemäß dieser Ausführungsform die Lab-Werte des Farbtons. Alternativ dazu können auch die Werte aus anderen Farbräumen verwendet werden, wie LUV-Werte, RGB-Werte, LCh-Werte, XYZ-Werte oder dergleichen.

Die vorstehenden Ausführungen zu den in den Datensätzen der Datenbank gespeicherten Informationen über den Farbton gelten für den in dem Schritt b) des erfindungsgemäßen Verfahrens einzugebenden Zielfarbton gleichermaßen. Mithin kann es sich bei dem in dem Schritt b) von dem Benutzer vorzugebenden Zielfarbton jeweils um die Daten einer über einen Wellenlängenbereich von 180 bis 4.000 nm und bevorzugt über einen Wellenlängenbereich von 400 bis 700 nm aufgenommenen Spektralkurve, wie insbesondere einer spektralen Reflexionskurve, um die Lab-Werte des Farbtons oder dergleichen handeln.

Erfindungsgemäß sind in der Datenbank zwei Farbrezepturen als gleich bewertet, wenn diese die gleichen farbgebenden Bestandteile aufweisen und bezüglich der Mengen der einzelnen farbgebenden Bestandteile voneinander um maximal 0,5% pro farbgebenden Bestandteil abweichen. Hingegen sind zwei oder mehr Farbrezepturen als voneinander verschieden bewertet, wenn diese wenigstens einen verschiedenen farbgebenden Bestandteil aufweisen oder, wenn diese die gleichen farbgebenden Bestandteile aufweisen, bezüglich der Mengen der einzelnen farbgebenden Bestandteile voneinander um mehr als 0,5% pro Bestandteil abweichen.

Um eine - bezogen auf die Anzahl der darin enthaltenen Datensätze - Abdeckung einer besonders großen Anzahl an Varianten aus der aus Farbton, aus Substrat, aus Farbrezeptur und aus Applikationsverfahren bestehenden Matrix zu erreichen, wird es in Weiterbildung des Erfindungsgedankens vorgeschlagen, dass die Datenbank für wenigstens 10%, weiter bevorzugt für wenigstens 20%, besonders bevorzugt für wenigstens 50%, weiter bevorzugt für wenigstens 70%, ganz besonders bevorzugt für wenigstens 90% und höchst bevorzugt für alle Farbrezepturen jeweils mindestens zwei verschiedene Datensätze umfasst, welche jeweils denselben Farbrezepturidentifikationscode und Informationen über die gleiche Farbrezeptur, über ein Substrat, über ein Applikationsverfahren sowie über einen sich nach der Applikation der in dem jeweiligen Datensatz gespeicherten Farbrezeptur mit dem in dem jeweiligen Datensatz gespeicherten Applikationsverfahren auf das in dem jeweiligen Datensatz gespeicherte Substrat für das Farbprodukt ergebenden Farbton umfassen, wobei sich das Substrat von jedem der mindestens zwei verschiedenen Datensätze von dem Substrat von jedem anderen der mindestens zwei verschiedenen Datensätze unterscheidet, und wobei sich nach der Applikation der jeweiligen Farbrezeptur mit dem in dem jeweiligen Datensatz gespeicherten Applikationsverfahren auf das in dem jeweiligen Datensatz gespeicherte Substrat jeweils ein Farbprodukt ergibt, wobei sich der Farbton des Farbprodukts von jedem der mindestens zwei verschiedenen Datensätze von dem Farbton der Farbprodukte aller anderen der mindestens zwei verschiedenen Datensätze unterscheidet.

Bei dieser Ausführungsform ist es besonders bevorzugt, dass die Datenbank für die mindestens eine Farbrezeptur jeweils mindestens zwei verschiedene, bevorzugt mindestens sechs verschiedene, besonders bevorzugt mindestens zehn verschiedene und ganz besonders bevorzugt mindestens zwanzig verschiedene Datensätze umfasst, welche jeweils denselben Farbrezepturidentifikationscode und Informationen über die gleiche Farbrezeptur, über ein Substrat, über ein Applikationsverfahren sowie über einen sich nach der Applikation der in dem jeweiligen Datensatz gespeicherten Farbrezeptur mit dem in dem jeweiligen Datensatz gespeicherten Applikationsverfahren auf das in dem jeweiligen Datensatz gespeicherte Substrat für das Farbprodukt ergebenden Farbton umfassen, wobei sich das Substrat von jedem der mindestens vier verschiedenen Datensätze von dem Substrat von jedem anderen der mindestens vier verschiedenen Datensätze unterscheidet, und wobei sich nach der Applikation der jeweiligen Farbrezeptur mit dem in dem jeweiligen Datensatz gespeicherten Applikationsverfahren auf das in dem jeweiligen Datensatz gespeicherte Substrat jeweils ein Farbprodukt ergibt, wobei sich der Farbton des Farbprodukts von jedem der mindestens vier verschiedenen Datensätze von dem Farbton der Farbprodukte aller anderen der mindestens vier verschiedenen Datensätze unterscheidet.

Um eine hohe Datenqualität zu erreichen, ist es gemäß einer besonders bevorzugten Ausführungsform der vorliegenden Erfindung ganz besonders bevorzugt, dass alle der Datensätze, in denen Informationen über eine Farbrezeptur gespeichert sind, welche von der Information über eine Farbrezeptur eines oder mehrerer anderer Datensätze verschieden ist, ein anderer Farbrezeptidentifikationscode gespeichert als in den ein oder mehreren anderen Datensätzen.

Bei dem in jedem der Datensätze gespeicherten Farbrezeptidentifikationscode kann es sich insbesondere um einen Zahlen- und/oder Buchstabencode oder um einen Text handeln.

Um in der Datenbank eine hohe Datenqualität im Hinblick darauf zu erreichen, dass in jedem die gleiche Farbrezeptur oder zumindest die nahezu gleiche Farbrezeptur betreffenden Datensatz der Datenbank für die unmittelbar mit der Farbrezeptur verbundenen Parameter dieselben Informationen gespeichert sind, wird es in Weiterbildung des Erfindungsgedankens vorgeschlagen, dass wenigstens 10%, bevorzugt wenigstens 25%, weiter bevorzugt wenigstens 50%, noch weiter bevorzugt wenigstens 75%, ganz besonders bevorzugt wenigstens 90% und höchst bevorzugt alle der mindestens zwei verschiedenen Datensätze, in denen jeweils derselbe Farbrezepturidentifikationscode gespeichert ist, auch Informationen für mindestens einen weiteren Parameter enthalten, wobei diese Informationen über den mindestens einen weiteren Parameter für die Farbrezeptur charakteristisch sind und in allen der mindestens zwei verschiedenen Datensätze identisch sind. Dies kann beispielsweise einfach dadurch geschehen, dass diese Datensätze für diese Parameter auf eine diese Farbrezeptur betreffende Tabelle zugreifen, in der alle Informationen über die unmittelbar mit der Farbrezeptur verbundenen Parameter gespeichert sind. Auf diese Weise wird nicht nur sichergestellt, dass die Datenbank nicht zwei oder mehr Datensätze enthält, welche Informationen über nahezu identische oder sehr ähnliche Farbrezepturen, identische Informationen über das Substrat sowie das Applikationsverfahren und identische oder nahezu identische Informationen über die sich nach Applikation der Farbrezepturen mit dem Applikationsverfahren auf das Substrat jeweils ergebenden Farbtöne, die für das menschliche Auge nicht unterscheidbar sind, enthalten. Zudem wird dadurch zuverlässig vermieden, dass die dieselbe Farbrezeptur betreffenden Datensätze hinsichtlich der über die unmittelbar mit der Farbrezeptur verbundenen Parameter (also für diejenigen Parameter, welche für die Farbrezeptur charakteristisch sind), wie Chemikalienbeständigkeit oder Temperaturbeständigkeit der Farbrezeptur, unterschiedliche Informationen enthalten.

Beispiele für geeignete, unmittelbar mit der Farbrezeptur verbundene Parameter im Sinne der vorstehend beschriebenen Ausführungsform sind solche, welche aus der Gruppe ausgewählt sind, die aus Beständigkeit der Farbrezeptur gegenüber Licht, gegenüber Temperatur, gegenüber gamma-Strahlen, gegenüber Chemikalien, gegenüber Pasteurisation, gegenüber Sterilisation, gegenüber Feuchtigkeit und beliebigen Kombinationen von zwei oder mehr der vorgenannten besteht.

Um die hohe Datenqualität der Datenbank beizubehalten, ist es vorgesehen, dass bei der Anlage eines neuen Datensatzes in die Datenbank der Benutzer und bevorzugt das die Dateneingabe in die Datenbank betreibende Computerprogramm automatisch prüft, ob für die Farbrezeptur, über die in dem neu anzulegenden Datensatz Informationen gespeichert werden sollen, bereits innerhalb des vorgenannten Toleranzbereiches mindestens ein Datensatz enthalten ist oder nicht, wobei, falls nicht, der neue Datensatz angelegt wird sowie in diesem ein neu vergebener Farbrezepturidentifikationscode gespeichert, und, falls ja, des Weiteren geprüft wird, ob der mindestens eine Datensatz Informationen über dasselbe Substrat, über dasselbe Applikationsverfahren und über den gleichen sich nach der Applikation der Farbrezeptur mit dem Applikationsverfahren auf das Substrat ergebenden Farbton enthält, wobei, wenn ja, der Benutzer eine Mitteilung erhält, dass in der Datenbank bereits ein entsprechender Datensatz enthalten ist und dann der anzulegende Datensatz nicht angelegt oder nur, wenn der Benutzer bestätigt, dass er dennoch angelegt werden soll, und, wenn nein, in dem neu anzulegenden Datensatz derselbe Farbrezepturidentifikationscode gespeichert wird.

Unter in den Datensätzen gespeicherten Informationen über die Farbrezeptur werden im Sinne der vorliegenden Erfindung alle Arten von Informationen verstanden, welche die Farbrezeptur eindeutig charakterisieren. Beispielsweise können diese Informationen die Angabe aller in der Farbrezeptur enthaltenen Einzelkomponenten bzw. Rohstoffe sowie deren Mengen umfassen. Allerdings ist es auch möglich, die Farbrezeptur als Mischung aus Halbfertigprodukten anzugeben, wie einer Mischung aus einem oder mehreren Verschnitten und einem oder mehreren Farbmitteln. Ferner ist es auch möglich, die Farbrezeptur als Mischung aus Fertigprodukten anzugeben, wie einer Mischung aus zwei oder mehr Farben. In diesen Fällen umfassen die Informationen die Angabe aller in der Farbrezeptur enthaltenen Einzelkomponenten bzw. Rohstoffe sowie deren Mengen, die Angabe aller in der Farbrezeptur enthaltenen Halbfertigprodukte sowie deren Mengen bzw. die Angabe aller in der Farbrezeptur enthaltenen Fertigprodukte sowie deren Mengen. Zudem ist es auch möglich, die Farbrezeptur als Mischung aus Einzelkomponenten bzw. Rohstoffen und Halbfertigprodukten, als Mischung aus Einzelkomponenten bzw. Rohstoffen und Fertigprodukten, als Mischung aus Halbfertigprodukten und Fertigprodukten oder als Mischung aus Einzelkomponenten bzw. Rohstoffen, Halbfertigprodukten und Fertigprodukten anzugeben. Schließlich ist es auch möglich, die Farbrezeptur anhand eines Handelsnamens oder eines Codes aus Buchstaben- und/oder Zahlenkombinationen zu spezifizieren.

Gemäß einer besonders bevorzugten Ausführungsform der vorliegenden Erfindung ist es vorgesehen, dass wenigstens eine, bevorzugt wenigstens 10%, besonders bevorzugt wenigstens 50%, weiter bevorzugt wenigstens 80%, ganz besonders bevorzugt wenigstens 90% und höchst bevorzugt alle der Farbrezepturen, über die in den Datensätzen der Datenbank Informationen enthalten sind, aus Halbfertigprodukten, nämlich bevorzugt aus wenigstens einem Farbmittel und wenigstens einem nicht-färbenden Verschnitt zusammengesetzt sind. Besonders bevorzugt sind diese aus zwei bis fünfzehn und besonders bevorzugt aus zwei bis zehn Halbfertigprodukten zusammengesetzt. Beispielsweise ist es bevorzugt, dass diese aus zwei bis vier Farbmitteln und einem nicht-färbenden Verschnitt zusammengesetzt sind. Beispielsweise können zu diesen färbenden und nichtfärbenden Komponenten weitere Halbfertigprodukte oder Rohstoffe, wie Lösemittel oder Lösemittelgemische, Additive, wie z.B. Slip-, Wachsadditive oder Entschäumer, Haftvermittler, Photoinitiatoren, Stabilisatoren, Trockenstoffe, Härter oder ähnliches hinzukommen. Die in den Datensätzen gespeicherten Informationen über die Farbrezeptur umfassen bei dieser Ausführungsform die Angabe aller in der Farbrezeptur enthaltenen Halbfertigprodukte sowie deren Mengen. Dabei kann der nicht-färbende Verschnitt wenigstens eine Komponente enthalten, welche aus der Gruppe ausgewählt ist, welche aus Bindemitteln, Lösungsmitteln, Wachsen, Additiven, Reaktivverdünnern, Fotoinitiatoren, Härtern und beliebigen Kombinationen von zwei oder mehr dieser Verbindungen besteht. Bei dem wenigstens einen Farbmittel handelt es sich bevorzugt um eine Pigmentformulierung in fester, flüssiger oder pastöser Form oder um eine einen oder mehrere Farbstoffe enthaltende Formulierung, in der ein Pigment oder eine Mischung aus zwei oder mehr Pigmenten, oder ein Farbstoff oder eine Mischung aus mehreren Farbstoffen in Lösungsmittel, Bindemittel oder einer Mischung aus Lösungsmittel und Bindemittel dispergiert ist. Das Farbmittel kann beispielsweise wenigstens ein Effektpigment enthalten, welches bevorzugt aus der Gruppe ausgewählt ist, die aus Metalleffektpigmenten, Perlglanzpigmenten, mit Metalloxid beschichtetem Glimmer, Interferenzpigmenten, Lumineszenzpigmenten, UV-absorbierenden Pigmenten, IR-absorbierenden Pigmenten, photochromen Pigmenten, thermochromen Pigmenten, piezo-elektronischen Pigmenten, magnetischen Pigmenten und beliebigen Kombinationen von zwei oder mehr der vorstehenden Pigmenttypen besteht. Alternativ dazu können oder auch zusätzlich dazu können auch Nichteffektpigmente, wie Buntpigmente, Weißpigmente, Schwarzpigmente oder Farbstoffe eingesetzt werden. Vorzugsweise enthält das wenigstens eine Farbmittel zusätzlich ein oder mehrere aus der aus Additiven, Reaktivverdünner, Fotoinitiatoren, Härtern und beliebigen Kombinationen von zwei oder mehr der vorstehenden Verbindungen bestehenden Gruppe ausgewählte Verbindungen. Beispielsweise kann das wenigstens eine Farbmittel als Additiv ein Dispergiermittel enthalten.

Gemäß einer dazu alternativen Ausführungsform der vorliegenden Erfindung ist es vorgesehen, dass wenigstens eine, bevorzugt wenigstens 10%, besonders bevorzugt wenigstens 50%, weiter bevorzugt wenigstens 80%, ganz besonders bevorzugt wenigstens 90% und höchst bevorzugt alle der Farbrezepturen, über die in den Datensätzen der Datenbank Informationen enthalten sind, aus Fertigprodukten, nämlich bevorzugt aus zwei bis fünfzehn Farben und besonders bevorzugt aus zwei bis zehn Farben zusammengesetzt sind. Diese können als Farbmittel wenigstens ein Effektpigment enthalten, welches bevorzugt aus der Gruppe ausgewählt ist, die aus Metalleffektpigmenten, Perlglanzpigmenten, mit Metalloxid beschichtetem Glimmer, Interferenzpigmenten, Lumineszenzpigmenten, UV-absorbierenden Pigmenten, IR-absorbierenden Pigmenten, photochromen Pigmenten, thermochromen Pigmenten, piezo-elektronischen Pigmenten, magnetischen Pigmenten und beliebigen Kombinationen von zwei oder mehr der vorstehenden Pigmenttypen besteht. Alternativ dazu können oder auch zusätzlich dazu können auch Nichteffektpigmente oder Farbstoffe eingesetzt werden.

Gemäß einer weiteren, dazu alternativen Ausführungsform der vorliegenden Erfindung ist es vorgesehen, dass ein Teil der Farbrezepturen, über die in den Datensätzen der Datenbank Informationen enthalten sind, aus Fertigprodukten, nämlich bevorzugt aus zwei bis fünf Farben sowie ggf. einer zusätzlich farbneutralen Komponente, wie Verschnitt, zusammengesetzt sind, wohingegen der andere Teil der Farbrezepturen aus Halbfertigprodukten, nämlich bevorzugt aus zwei bis zehn Halbfertigprodukten zusammengesetzt ist.

In Bezug auf die Art der Farbrezepturen, über die in den Datensätzen der Datenbank Informationen enthalten sind, ist die vorliegende Erfindung nicht limitiert. Vorzugsweise sind wenigstens eine, bevorzugt wenigstens 10%, besonders bevorzugt wenigstens 50%, weiter bevorzugt wenigstens 80%, ganz besonders bevorzugt wenigstens 90% und höchst bevorzugt alle Farbrezepturen, über die in den Datensätzen der Datenbank Informationen enthalten sind, aus der Gruppe ausgewählt, welche aus Druckfarben, Farblacken, Pulverlacken, Lederfarben und Textilfarben besteht.

Zusätzlich zu den Informationen über den Farbton und den Informationen über die Farbrezeptur enthalten die entsprechenden Datensätzen auch Informationen zu dem Applikationsverfahren und zu dem Substrat, woraus sich durch Applizieren der Farbrezeptur, über welche in diesen Datensätzen Informationen enthalten sind, mit dem Applikationsverfahren auf das Substrat der Farbton ergibt, über den in diesen Datensätzen Informationen enthalten sind. Während die Informationen zu dem Applikationsverfahren die Angabe des Applikationsverfahrens, wie beispielsweise Rollenoffsetdruck, die Angabe eines das Applikationsverfahren identifizierenden Zahlen- und/oder Buchstabencodes oder Textes oder dergleichen umfassen, handelt es sich bei den Informationen zu dem Substrat beispielsweise um die Angabe des Substrats, wie beispielsweise ein spezielles Papier, um die Angabe eines das Substrat identifizierenden Zahlen- und/oder Buchstabencodes oder Textes oder um die Daten einer über einen Wellenlängenbereich von 180 bis 4000 nm, bevorzugt von 400 bis 700 nm aufgenommenen Spektralkurve, wie insbesondere einer spektralen Reflexionskurve, oder um die Lab-Werte des Substrats oder dergleichen.

Bezüglich der Art des Applikationsverfahrens, über das in den Datensätzen der Datenbank Informationen enthalten sind, ist die vorliegende Erfindung nicht beschränkt. Mithin kann es sich bei dem Applikationsverfahren um jedes Applikationsverfahren handeln, mit dem eine Farbrezeptur auf ein Substrat aufgebracht werden kann. Beispielsweise kann es sich bei dem Applikationsverfahren, über das in den Datensätzen der Datenbank Informationen enthalten sind, um ein Applikationsverfahren handeln, welches aus der aus Druckverfahren, Lederfärbeprozessen, Textilfärbeprozessen, Streichen, Rollen, Spritzen, Tauchen, Walzen, Fluten, Glasieren, Pulverbeschichten, Emaillieren und beliebigen Kombinationen von zwei oder mehr der vorstehenden Verfahren bestehenden Gruppe ausgewählt ist. Vorzugsweise handelt es sich bei dem Applikationsverfahren, über das in den Datensätzen der Datenbank Informationen enthalten sind, um eines, welches aus der ausgewählt ist, welche aus Flachdruck, Tiefdruck, Flexodruck, Digitaldruck, Siebdruck, Hochdruck, Tampondruck, Transferdruck, Sublimationsdruck, Lichtdruck, Lederfärbeprozessen, Textilfärbeprozessen und beliebigen Kombinationen von zwei oder mehr der vorstehenden Verfahren besteht. Beispiele für Flachdruck sind Bogenoffsetdruck, Rollenoffsetdruck, Steindruck, Lithografiedruck, wohingegen Beispiele für Digitaldruck Xerografie und Inkjet sind.

Die vorstehenden Ausführungen zu den hierzu in den Datensätzen der Datenbank gespeicherten Informationen über Applikationsverfahren gelten für das in dem Schritt b) des erfindungsgemäßen Verfahrens einzugebende Zielapplikationsverfahren gleichermaßen. Mithin kann es sich bei dem in dem Schritt b) von dem Benutzer vorzugebenden Zielapplikationsverfahren jeweils um die Angabe des Applikationsverfahrens, die Angabe eines das Applikationsverfahren identifizierenden Zahlen- und/oder Nummerncodes oder Textes oder dergleichen handeln, wobei Zielapplikationsverfahren aus derselben, vorstehend erläuterten Gruppe von Verfahren ausgewählt sein kann.

Auch bezüglich der Art des Substrates, über das in den Datensätzen der Datenbank Informationen enthalten sind, und das Zielsubstrat, welches in dem Schritt b) eingegeben wird, ist die vorliegende Erfindung nicht besonders limitiert. Mithin kann es sich bei dem Substrat sowie bei dem Zielsubstrat um jedes Substrat handeln, auf das mit einem Applikationsverfahren eine Farbrezeptur aufgebracht werden kann. Beispielsweise kann es sich bei dem Substrat sowie bei dem Zielsubstrat um ein Substrat handeln welches aus der aus Papier, Karton, Pappe, Kunststofffolie, Leder, Textil, Metall, Holz, Glas, Keramik, Haut, metallisierten Oberflächen, Beton, Kunststoffkörpern, Laminaten, Verbundwerkstoffen und beliebigen Kombinationen von zwei oder mehr der vorstehenden Substrate bestehenden Gruppe ausgewählt ist. Vorzugsweise ist das Substrat bzw. das Zielsubstrat aus der Gruppe ausgewählt, welche aus Zeitungsdruckpapier, ungestrichenem Papier, gestrichenem Papier, Karton, Pappe, Wellpappe, Kunststofffolie (beispielsweise aus PE Polyethylen, OPP Polypropylen, OPA Polyamid, PVC Polyvinylchlorid, PET Polyethylenterephthalat, PLA Polylactid-Folie), Filzen, Vliesstoffen, Laminaten aus Kunststoff- und Aluminiumfolie, Leder, Textil und beliebigen Kombinationen von zwei oder mehr der vorstehenden Substrate besteht.

Bei den in den Datensätzen enthaltenen Informationen zu dem Substrat kann es sich um die Angabe des Substrats, wie beispielsweise ein spezielles Papier, um die Angabe eines das Substrat identifizierenden Zahlen- und/oder Buchstabencodes oder Textes, um die Daten einer über einen Wellenlängenbereich von 180 bis 4000 nm, bevorzugt von 400 bis 700 nm aufgenommenen Spektralkurve, wie insbesondere einer spektralen Reflexionskurve, um die Lab-Werte des Substrats oder dergleichen handeln. Alternativ dazu oder zusätzlich dazu kann für das Substrat beispielsweise auch dessen Bezeichnung oder Handelsname eingegeben oder die Spektralkurve eingemessen oder eingelesen werden. Vorzugsweise handelt es sich bei den in den Datensätzen der Datenbank gespeicherten Informationen über die jeweiligen Substrate um Daten einer Spektralkurve, die erhalten worden ist, indem von dem jeweiligen Substrat mit einem Spektrophotometer über einen Wellenlängenbereich von 180 bis 4000 nm, bevorzugt von 400 bis 700 nm eine Spektralkurve aufgenommen worden ist. Besonders bevorzugt handelt es sich dabei um eine über einen Wellenlängenbereich von 180 bis 4000 nm, bevorzugt von 400 bis 700 nm aufgenommene spektrale Reflexionskurve, wobei für diese die Gesamtreflexion, die Totalreflexion, die diffuse Reflexion oder die gerichtete Reflexion gemessen sein kann. Die Messung kann dabei beispielsweise bei einem Einstrahlwinkel/Sensormesswinkel von 45°/0°, bei 0°/45°, bei diffuser Einstrahlung/0°, bei diffuser Einstrahlung/8° oder bei anderen Winkel erfolgen, jeweils in Bezug zur Oberfläche. Die Daten der Spektralkurve können bei dieser Ausführungsform der vorliegenden Erfindung die Reflexionswerte für jeden Nanometer zwischen 180 bis 4000 nm, bevorzugt zwischen 400 und 700 nm sein, die Reflexionswerte für jeden fünften Nanometer zwischen 180 bis 4000 nm, bevorzugt zwischen 400 und 700 nm sein, die Reflexionswerte für jeden zehnten Nanometer zwischen 180 bis 4000 nm, bevorzugt zwischen 400 und 700 nm sein oder die Reflexionswerte in anderen Abständen.

Die vorstehenden Ausführungen zu dem Substrat und den hierzu in den Datensätzen der Datenbank gespeicherten Informationen gelten für das in dem Schritt b) des erfindungsgemäßen Verfahrens einzugebende Zielsubstrat gleichermaßen. Mithin kann das Zielsubstrat insbesondere aus der vorstehend beschriebenen Gruppe ausgewählt sein. Zudem ist es insbesondere möglich, in dem Schritt b) für das Zielsubstrat einen das Substrat identifizierenden Zahlenundloder Buchstabencode oder Text, die Daten einer über einen Wellenlängenbereich von 180 bis 4000 nm, bevorzugt von 400 bis 700 nm aufgenommenen Spektralkurve, wie insbesondere einer spektralen Reflexionskurve, die Lab-Werte des Zielsubstrats, die Bezeichnung oder den Handelsnamen des Zielsubstrats einzugeben.

Vorzugsweise erfolgt das Vorgeben in dem Schritt b) durch Eingaben des Benutzers in das Computerprogramm. Um das Vorgeben in dem Schritt b) durch Eingaben des Benutzers in das Computerprogramm zu ermöglichen, wird es in Weiterbildung des Erfindungsgedankens vorgeschlagen, dass das Computerprogramm anklickbare Vorauswahlen der einzugebenden Parameter, nämlich Zielapplikationsverfahren, Zielsubstrat und Zielfarbton, enthält. Alternativ dazu kann das Vorgeben auch durch Übertragung von Daten erfolgen, indem beispielsweise entsprechende Daten aus einer auf einem Datenträger oder in einem Computer gespeicherten Datei in das Computerprogramm übertragen werden.

Um das Vorgeben des Zielapplikationsverfahrens in dem Schritt b) zu ermöglichen, ist es bevorzugt, dass das Computerprogramm anklickbare Vorauswahlen von Applikationsverfahren enthält, aus denen der Benutzer in dem Schritt b) das Zielapplikationsverfahren durch Anklicken vorgeben kann. Alternativ dazu, kann das Computerprogramm so programmiert sein, dass es die Eingabe des Zielapplikationsverfahren als Text oder als das Zielapplikationsverfahren identifizierenden Zahlen- und/oder Textcodes ermöglicht.

In Weiterbildung des Erfindungsgedankens wird es vorgeschlagen, dass das Computerprogramm so ausgestaltet ist, dass der Benutzer in dem Schritt b) das Zielsubstrat auf mindestens eine und bevorzugt alle der folgenden Weisen vorgeben kann:
i) Übertragen der Daten einer mit einem Spektrophotometer zwischen 180 und 4000 nm und bevorzugt zwischen 400 und 700 nm aufgenommenen Spektralkurve, bevorzugt einer spektralen Reflexionskurve und besonders bevorzugt einer wie weiter vorstehend erläutert gemessenen spektralen Reflexionskurve des Zielsubstrats in das Computerprogramm, beispielsweise direkt (d.h. ohne zwischengeschalteten Datenträger), von einer DVD, einem USB-Stick oder dergleichen,
ii) Anklicken des Zielsubstrats aus einer in dem Computerprogramm gespeicherten Sammlung von Vorauswahlen für verschiedene Substrate,
iii) Eingeben der Werte einer Spektralkurve, bevorzugt einer spektralen Reflexionskurve und besonders bevorzugt einer wie weiter vorstehend erläutert gemessenen spektralen Reflexionskurve des Zielsubstrats in das Computerprogramm, beispielsweise indem die Reflexionswerte für die Wellenlängen zwischen 180 und 4000 nm und bevorzugt zwischen 400 und 700 nm in 1 nm-Abständen, in 5 nm-Abständen, in 10 nm-Abständen oder in anderen Abständen als Zahlen eingegeben werden,
iv) Eingeben oder Übertragen der Lab-Werte des Zielsubstrats oder von Werten eines anderen Farbraumes, wie LUV-Werte, RGB-Werte, LCh-Werte, XYZ-Werte oder dergleichen in das Computerprogramm.

Gleichermaßen ist es bevorzugt, dass das Computerprogramm so ausgestaltet ist, dass der Benutzer in dem Schritt b) den Zielfarbton auf mindestens eine und bevorzugt alle der folgenden Weisen vorgeben kann:
i) Übertragen der Daten einer mit einem Spektrophotometer zwischen 180 und 4000 nm und bevorzugt zwischen 400 und 700 nm aufgenommenen Spektralkurve, bevorzugt einer spektralen Reflexionskurve und besonders bevorzugt einer wie weiter vorstehend erläutert gemessenen spektralen Reflexionskurve des Zielfarbtons in das Computerprogramm, beispielsweise direkt (d.h. ohne zwischengeschalteten Datenträger), von einer DVD, einem USB-Stick oder dergleichen,
ii) Anklicken des Zielfarbtons aus einer in dem Computerprogramm gespeicherten Sammlung von Vorauswahlen für verschiedene Farbtöne,
iii) Eingeben oder Einlesen der Werte einer Spektralkurve, bevorzugt einer spektralen Reflexionskurve und besonders bevorzugt einer wie weiter vorstehend erläutert gemessenen spektralen Reflexionskurve des Zielfarbtons in das Computerprogramm, beispielsweise indem die Reflexionswerte für die Wellenlängen zwischen 180 und 4000 nm und bevorzugt zwischen 400 und 700 nm in 1 nm-Abständen, in 5 nm-Abständen, in 10 nm-Abständen oder in anderen Abständen als Zahlen eingegeben werden,
iv) Eingeben, Einlesen oder Übertragen der Lab-Werte des Zielfarbtons oder von Werten eines anderen Farbraumes, wie LUV-Werte, RGB-Werte, LCh-Werte, XYZ-Werte oder dergleichen in das Computerprogramm.

Erfindungsgemäß wird in dem Schritt c) die Datenbank mit einem Computerprogramm durchsucht, ob diese mindestens einen Datensatz enthält, dessen Farbrezeptur, über die in dem Datensatz Informationen enthalten sind, nach der Applikation mit dem in dem Schritt b) vorgegebenen Zielapplikationsverfahren auf das in dem Schritt b) vorgegebene Zielsubstrat ein Farbprodukt mit einem Farbton ergibt, der dem in dem Schritt b) vorgegebenen Zielfarbton entspricht oder maximal mit einer vorgegebenen Toleranz von diesem abweicht. Dabei wird eine Toleranz eingeräumt, um dem Umstand Rechnung zu tragen, dass das menschliche Auge minimalste Unterschiede zwischen zwei nahezu identischen Farbtönen nicht wahrnehmen kann. Durch die Einrichtung einer Toleranz wird daher die Wahrscheinlichkeit eines Treffers in dem Schritt c) erhöht, ohne dass inakzeptable Abweichungen von dem vorgegebenen Zielfarbton hingenommen werden müssen.

Gemäß der vorliegenden Erfindung ist in dem Computerprogramm eine Toleranz für den Schritt c) voreingestellt.

Alternativ dazu kann es vorgesehen sein, dass der Benutzer die Toleranz für den Schritt c) in das Computerprogramm eingeben kann. Das Computerprogramm kann hierzu so ausgestaltet werden, dass es eine stufenlose Einstellung der Toleranz, beispielsweise durch Eingabe eines Zahlenwertes, erlaubt. Ebenso ist es möglich, dass das Computerprogramm so ausgestaltet wird, dass der Benutzer die Toleranz gemäß in dem Computerprogramm vorgegebenen Voreinstellungen einstellen kann, beispielsweise indem der Benutzer eine von mehreren von dem Computerprogramm vorgegebenen Toleranzen anklickt und so auswählt. Ebenso ist es möglich, beide Ausführungsformen zu kombinieren, indem das Computerprogramm so ausgestaltet wird, dass der Benutzer entscheiden kann, ob er die Toleranz gemäß in dem Computerprogramm vorgegebenen Voreinstellungen oder beispielsweise durch Eingabe eines Zahlenwertes stufenlos einstellt.

Als Delta E-Werte können wiederum alle gängigen Delta E-Werte eingesetzt werden, wie beispielsweise der ΔE*_{ab}, der ΔE94, der ΔE₀₀, der DIN99, der DIN99ₒ, der CMC, der Lübbe, der Lübbe korrigiert, der CIECAM02. Vorzugsweise wird der ΔE₀₀ eingesetzt.

Gemäß einer weiteren bevorzugten Ausführungsform der vorliegenden Erfindung ist es vorgesehen, dass in dem Schritt d) nur die am besten den Zielfarbton ergebende Farbrezeptur angezeigt wird. Wenn in dem Schritt c) zwei oder mehr Datensätze gefunden werden, deren Farbrezepturen, über die in dem Datensatz Informationen enthalten sind, nach der Applikation mit dem in dem Schritt b) vorgegebenen Zielapplikationsverfahren auf das in dem Schritt b) vorgegebene Zielsubstrat Farbprodukte mit einem Farbton ergeben, der dem in dem Schritt b) vorgegebenen Zielfarbton entspricht oder maximal mit einer vorgegebenen Toleranz von diesem abweicht, wird daher gemäß dieser bevorzugten Ausführungsform nur derjenige Datensatz angezeigt wird, der ein Farbprodukt mit einem Farbton ergibt, der am wenigstens (also mit dem geringsten ΔE₀₀-Wert) von dem Zielfarbton abweicht.

Wie weiter vorstehend dargelegt, kann die Farbrezeptur prinzipiell als Rezept der Mengen aller einzelnen Rohstoffe angegeben werden. Da solche Farbrezepturen jedoch sehr komplex aufgebaut sind, bedeutet dies, dass die gesamte Farbe in einem insbesondere logistisch aufwendigen Produktionsprozess hergestellt werden muss, da zunächst alle Rohstoffe beschafft werden müssen. Daher ist es bevorzugt, dass die Farbrezeptur als Mischung aus Halbfertigprodukten, wie einer Mischung aus einem oder mehreren Verschnitten und einem oder mehreren Farbmitteln, oder als Mischung aus Fertigprodukten, wie einer Mischung aus mehreren Farben, gegebenenfalls zusätzlich mit Verschnitt, angegeben wird. Aus diesem Grund ist es bevorzugt, dass in dem Schritt d) die Zusammensetzung der Farbrezeptur i) als Mischung von Halbfertigprodukten, bevorzugt als Mischung von zwei bis fünfzehn Halbfertigprodukten und besonders bevorzugt als Mischung von zwei bis fünf Halbfertigprodukten angezeigt wird, oder ii) als Mischung von Fertigprodukten, bevorzugt als Mischung von zwei bis fünfzehn Fertigprodukten und besonders bevorzugt als Mischung von zwei bis fünf Fertigprodukten angezeigt wird, oder iii) als Mischung von Halbfertigprodukten mit Fertigprodukten angezeigt wird oder iv) als Mischung von Halbfertigprodukten mit Einzelkomponenten angezeigt wird oder v) als Mischung von Fertigprodukten mit Einzelkomponenten angezeigt wird oder vi) als Mischung von Halbfertigprodukten, Fertigprodukten und Einzelkomponenten angezeigt wird oder vii) als Mischung aus Einzelkomponenten angezeigt wird.

Das Anzeigen der in dem mindestens einem Datensatz gespeicherten Informationen über die Farbrezeptur umfasst bei diesen Ausführungsformen mithin die Angabe der Mengen und der Bezeichnung der einzelnen Halbfertigprodukte bzw. Fertigprodukte, aus denen die Farbrezeptur zusammengesetzt ist.

Die vorliegende Erfindung eignet sich insbesondere für die Verwendung von Datenbanken mit einer großen Anzahl von Datensätzen. Vorzugsweise umfasst die bei dem erfindungsgemäßen Verfahren verwendete Datenbank mehr als 10 Datensätze, weiter bevorzugt mehr als 100 Datensätze, noch weiter bevorzugt mehr als 1.000 Datensätze, insbesondere bevorzugt mehr als 10.000 Datensätze, besonders bevorzugt mehr als 100.000 Datensätze, ganz besonders bevorzugt mehr als 500.000 Datensätze und höchst bevorzugt eine Million Datensätze oder mehr.

Nach der Anzeige des in dem Schritt c) des erfindungsgemäßen Verfahrens gefundenen Treffers kann der Benutzer die gefundene Farbrezeptur herstellen oder von einem Dienstleister herstellen lassen. Insbesondere in dem Fall, dass die in dem Schritt c) gefundene Farbrezeptur nach den in der Datenbank enthaltenen Informationen nach der Applikation mit dem in dem Schritt b) vorgegebenen Zielapplikationsverfahren auf das in dem Schritt b) vorgegebene Zielsubstrat ein Farbprodukt mit einem Farbton ergibt, der von dem in dem Schritt b) vorgegebenen Zielfarbton innerhalb einer vorgegebenen Toleranz mit beispielsweise einem ΔE₀₀-Wert von 0,5 abweicht, ist es von Vorteil, wenn der Benutzer den sich ergebenden Farbton optisch anschauen kann, bevor er entscheidet, ob er diesen akzeptiert und die Farbe produziert oder produzieren lässt, oder nicht, und zwar, ohne zunächst die Farbrezeptur herstellen zu müssen. Um dies mit möglichst wenig Aufwand zu ermöglichen, ist es gemäß der vorliegenden Erfindung vorgesehen, dass das Computerprogramm einen Testalgorithmus umfasst, welcher einen Farbton simulieren kann, welcher nach dem Ausdrucken der Simulation mit einem Computer über einen Testpapierdrucker auf ein Testpapiersubstrat denselben Farbton ergibt, wie die Applikation der in dem Schritt c) gefundenen Farbrezeptur mit dem in dem Schritt b) vorgegebenen Zielapplikationsverfahren auf das in dem Schritt b) vorgegebene Zielsubstrat. Vorzugsweise ist das Computerprogramm bei dieser Ausführungsform so ausgestaltet, dass der Benutzer einen Testpapierdrucker sowie ein Testpapiersubstrat vorgeben kann, und zwar beispielsweise durch Anklicken eines entsprechenden Testpapierdruckers und Testpapiersubstrats in einer von dem Computerprogramm angezeigten Liste, oder durch Eingabe eines den Testpapierdrucker und das Testpapiersubstrat identifizierenden Zahlen- und/oder Nummerncodes oder dergleichen. Der Testpapierdrucker ist vorzugsweise ein handelsüblicher und weltweit kommerziell erhältlicher Papierdrucker, wie beispielsweise Tintenstrahldrucker oder Laserdrucker. Bei dem Testpapiersubstrat handelt es sich vorzugsweise um ein handelsübliches und weltweit kommerziell erhältliches Tintenstrahldruck- oder Laserdruckpapier. Diese Ausführungsform ermöglicht es dem Benutzer, einfach und kostengünstig den Farbton des so erhaltenen Testfarbprodukts, der dem des sich durch Aufbringen der Farbrezeptur durch das Zielapplikationsverfahren auf das Zielsubstrat ergebenden Farbprodukts entspricht, anzuschauen und zu bewerten.

Häufig handelt es sich bei dem von dem Benutzer beabsichtigten Farbprodukt nicht lediglich um ein mit einer Farbe versehenes Substrat, sondern beispielsweise um ein entsprechendes Farbprodukt, bei dem abschließend, nachdem die Farbrezeptur mit dem vorgegebenen Applikationsverfahren auf das vorgegebene Substrat aufgebracht worden ist, ein Überlack oder Primer aufgebracht worden ist. Wenn der Überlack oder Primer nicht farbneutral ist, wie beispielsweise im Falle von Mattlacken, Effektlacken, haptische Lacken, Duftlacken, verändert er den Farbton des Farbprodukts zumindest geringfügig. Selbst wenn der Überlack oder Primer farbneutral ist, beeinflusst der Überlack oder Primer den Glanz des Farbprodukts. Um diese Effekte bei dem Verfahren zu berücksichtigen, ist es bevorzugt, dass zumindest ein Teil der Datensätze, wie beispielsweise wenigstens 10% und bevorzugt wenigstens 30% der Datensätze auch Angaben zu einem Überlack oder Primer enthalten, wobei der in dem jeweilige Datensatz gespeicherte Farbton derjenige des Farbprodukts ist, welches erhalten wird, indem die in dem Datensatz gespeicherte Farbrezeptur mit dem in dem Datensatz gespeicherten Applikationsverfahren auf das in dem Datensatz gespeicherte Substrat gedruckt wird und dann der in dem Datensatz gespeicherte Überlack oder Primer aufgebracht wird. So wird sichergestellt, dass auch im Falle der Anwendung eines Überlacks oder Primers mit dem erfindungsgemäßen Verfahren eine Farbrezeptur ermittelt wird, die mit der vorgegebenen Toleranz den gewünschten Farbton für das den Überlack oder Primer enthaltenden Farbprodukt ergibt.

Aus den vorstehenden Gründen ist es bevorzugt, dass das bei dem erfindungsgemäßen Verfahren eingesetzte Computerprogramm so ausgestaltet ist, dass der Benutzer in dem Schritt b) einen Überlack oder Primer sowie eine Menge für den aufzubringenden Überlack oder Primer vorgeben kann und in dem Schritt c) die Datenbank durchsucht wird, ob diese mindestens einen Datensatz enthält, dessen gespeicherte Farbrezeptur mit einer vorgegebenen maximalen Toleranz den vorgegebenen Farbton ergibt, wenn die in dem Datensatz gespeicherte Farbrezeptur mit dem in dem Schritt b) vorgegebene Zielapplikationsverfahren auf das in dem Schritt b) vorgegebene Zielsubstrat appliziert wird und danach der in dem Schritt b) vorgegebene Überlack oder Primer in der vorgegebenen Menge aufgebracht wird.

Diese Ausführungsform ist insbesondere auch für Druckfarben bevorzugt, wobei dann der Überlack ein Überdrucklack ist, das Applikationsverfahren ein Druckverfahren ist und das Substrat ein Papier, Karton, Blech oder eine Kunststofffolie ist.

Neben Druckfarben eignet sich das erfindungsgemäße Verfahren insbesondere auch für Leder- und Textilfärbeprozesse, so dass das Applikationsverfahren insbesondere ein Lederfärbeprozess oder ein Textilfärbeprozess und das Substrat ein Leder oder ein Textil sein kann.

Gemäß einer weiteren besonders bevorzugten Ausführungsform der vorliegenden Erfindung ist es vorgesehen, dass wenigstens 10%, bevorzugt wenigstens 25%, weiter bevorzugt wenigstens 50%, noch weiter bevorzugt wenigstens 75%, ganz besonders bevorzugt wenigstens 90% und höchst bevorzugt alle der Datensätze auch Informationen über wenigstens eines der folgenden Charakteristika enthält:
i) ein oder mehrere Halbtöne des Farbprodukts,
ii) Glanzstufe des Farbprodukts,
iii) verschiedene Glanzstufen bei verschiedenen Betrachtungswinkeln des Farbprodukts,
iv) haptische (d.h. durch Tasten wahrnehmbare) Eigenschaften des Farbprodukts,
v) Kratzfestigkeit des Farbprodukts,
vi) Reißfestigkeit des Farbprodukts,
vii) Zugfestigkeit des Farbprodukts,
viii) Beständigkeit des Farbprodukts gegenüber Licht,
ix) Beständigkeit des Farbprodukts gegenüber Temperatur,
x) Beständigkeit des Farbprodukts gegenüber gamma-Strahlen,
xi) Beständigkeit des Farbprodukts gegenüber Chemikalien,
xii) Beständigkeit des Farbprodukts gegenüber Pasteurisation,
xiii) Beständigkeit des Farbprodukts gegenüber Sterilisation,
xiv) Beständigkeit des Farbprodukts gegenüber Feuchtigkeit,
xv) Beständigkeit des Farbprodukts gegenüber Delamination,
xvi) Abwesenheit von bestimmten Inhaltsstoffen in der Farbrezeptur,
xvii) Opazität des Farbprodukts,
xviii) Gleiteigenschaften des Farbprodukts.

Das Farbprodukt ist wiederum das Produkt, welches erhalten wird durch Applikation der Farbrezeptur, über die in dem entsprechenden Datensatz Informationen enthalten sind, mit dem Applikationsverfahren auf das Substrat, über welche in dem entsprechenden Datensatz Informationen enthalten sind. Gemäß einer weiteren Ausführungsform der vorliegenden Erfindung handelt es sich um einen Textilfärbeprozess, für den vorgesehen ist, dass wenigstens 10%, bevorzugt wenigstens 25%, weiter bevorzugt wenigstens 50%, noch weiter bevorzugt wenigstens 75%, ganz besonders bevorzugt wenigstens 90% und höchst bevorzugt alle der Datensätze auch Informationen über wenigstens eines der folgenden Charakteristika enthält:
i) Anti-statische Ausrüstung,
ii) Flammschutzausrüstung,
iii) Wasserabweisung,
iv) Ölabweisung,
v) Hydrophilierung,
vi) Fixierung,
vii) Appretur,
viii) Avivage,
ix) Beschichtung mit Wachs,
x) Beschichtung mit Fluorcarbonharzen,
xi) Lichtechtheit,
xii) Waschbeständigkeit,
xiii) Reibechtheit.

Gemäß einer weiteren Ausführungsform der vorliegenden Erfindung handelt es sich um einen Lederfärbeprozess, für den vorgesehen ist, dass wenigstens 10%, bevorzugt wenigstens 25%, weiter bevorzugt wenigstens 50%, noch weiter bevorzugt wenigstens 75%, ganz besonders bevorzugt wenigstens 90% und höchst bevorzugt alle der Datensätze auch Informationen über wenigstens eines der folgenden Charakteristika enthält:
i) Polyurethan-Zurichtung,
ii) Anilin-Zurichtung,
iii) Nitrocellulosezurichtung,
iv) Imprägnierung,
v) Prägung,
vi) Öl-Zurichtung,
vii) Wachs-Zurichtung,
viii) Lackierung (Öl-Lack),
ix) Lackierung (Kaltlack),
x) Lichtechtheit,
xi) Reibechtheit,
xii) Schmutzabweisung,
xiii) Glanz.

Diese drei zuletzt genannten Ausführungsformen erlauben es, mit dem erfindungsgemäßen Verfahren nicht nur eine Farbrezeptur zu ermitteln, die mit dem gewünschten Zielapplikationsverfahren auf das gewünschte Zielsubstrat aufgebracht ein Farbprodukt mit dem gewünschten Zielfarbton ergibt, sondern insbesondere auch eine entsprechende Farbrezeptur zu ermitteln, welche die gewünschten weiteren Eigenschaften aufweist, wie eine gewünschte Chemikalienbeständigkeit, zu einem gewünschten Glanz des Farbprodukts führt oder dergleichen.

Zur Umsetzung dieser Ausführungsform ist es zudem bevorzugt, dass das bei dem erfindungsgemäßen Verfahren eingesetzte Computerprogramm so ausgestaltet ist, dass der Benutzer in dem Schritt b) zusätzlich wenigstens eines der Charakteristika i) bis xviii) für Druckverfahren, bzw. i) bis xiii) für Textilien und Leder vorgeben kann.

Um die Vorteile für diese Ausführungsform in erhöhtem Maße zu erzielen, wird es in Weiterbildung des Erfindungsgedankens vorgeschlagen, dass wenigstens 10%, bevorzugt wenigstens 25%, weiter bevorzugt wenigstens 50%, noch weiter bevorzugt wenigstens 75%, ganz besonders bevorzugt wenigstens 90% und höchst bevorzugt alle der Datensätze auch Informationen über wenigstens drei, bevorzugt wenigstens fünf, besonders bevorzugt wenigstens 10, ganz besonders bevorzugt wenigstens 15 und höchst bevorzugt alle der Charakteristika i) bis xviii) enthalten und vorzugsweise der Benutzer diese in Schritt b) vorgeben kann.

In Weiterbildung des Erfindungsgedankens wird es vorgeschlagen, dass wenigstens 10%, bevorzugt wenigstens 50%, besonders bevorzugt wenigstens 80%, weiter bevorzugt wenigstens 90%, ganz besonders bevorzugt wenigstens 95% und höchst bevorzugt alle der in der Datenbank enthaltenen Datensätze bei drei verschiedenen Winkeln, bevorzugt bei 20°, bei 60° und bei 85°, mindestens jedoch bei 60° in Bezug auf die Oberfläche des Farbprodukts, bestimmte Glanzwerte enthalten, und, dass der Benutzer in dem Schritt b) Werte für die bei den drei verschiedenen Winkeln für das Farbprodukt zu erzielenden Zielglanzwerte vorgeben kann. Bei dieser Ausführungsform ist es insbesondere bevorzugt, dass die Glanzwerte zumindest zwischen glänzend, halbmatt und matt abgestuft sind. Beispielsweise können Mattlacke Glanzwerten zwischen 0 und 24 entsprechen, Halbmattlacke Glanzwerten zwischen 25 und 50 entsprechen und Glanzlacke Glanzwerten über 51 entsprechen.

Die Glanzwerte werden entsprechend der DIN 675301 ISO 2813 gemessen und die Lacke beispielsweise mit einem 6µm-Rakel aufgebracht.

Gemäß einer weiteren ganz besonders bevorzugten Ausführungsform der vorliegenden Erfindung ist es vorgesehen, dass wenigstens 10%, bevorzugt wenigstens 50%, besonders bevorzugt wenigstens 80%, weiter bevorzugt wenigstens 90%, ganz besonders bevorzugt wenigstens 95% und höchst bevorzugt alle der in der Datenbank enthaltenen Datensätze Informationen über mindestens einen Halbton umfassen, wobei diese Informationen zumindest Informationen über den Farbton enthalten, den das Farbprodukt aufweist, das erhalten wird, wenn die Farbrezeptur, über die in dem entsprechenden Datensatz Informationen gespeichert sind, als Halbton mit dem Zielapplikationsverfahren auf das Zielsubstrat appliziert wird. Dies ermöglicht eine Aussage darüber, wie der gewünschte Farbton im Vollton und in den einzelnen Abstufungen/Halbtönen erscheint bzw. welche Spektralkurven sich entsprechend ergeben. Dies ist bevorzugt, um optisch als auch spektral gleiche Farbtöne, die aus mehreren verschiedenen Pigment-Kombinationen gemischt wurden, in den Halbtönen unterscheiden zu können. Die Volltöne können optisch und spektral gleich erscheinen, aber in den Halbtönen werden unterschiedliche Farbtöne/-orte erhalten, wenn unterschiedliche Pigmentkombinationen vorliegen.

Bei dieser Ausführungsform ist es insbesondere bevorzugt, dass die entsprechenden Datensätze entsprechende Informationen über mindestens zwei Halbtöne, bevorzugt über mindestens 4 Halbtöne und besonders bevorzugt mindestens 6 Halbtöne umfasst, wobei die Informationen über jeden der mindestens zwei Halbtöne zumindest Informationen über den jeweiligen Farbton enthalten, den das jeweilige Farbprodukt aufweist, das erhalten wird, wenn die Farbrezeptur, über die in dem entsprechenden Datensatz Informationen gespeichert sind, als jeweiliger Halbton mit dem Zielapplikationsverfahren auf das Zielsubstrat appliziert wird. Vorzugsweise decken die Halbtöne, über welche Informationen in dem jeweiligen Datensatz enthalten sind, mindestens 25%, besonders bevorzugt mindestens 50%, ganz besonders bevorzugt mindestens 75% und höchst bevorzugt den gesamten Halbtonbereich ab.

Zur Umsetzung dieser Ausführungsform ist es zudem bevorzugt, dass das bei dem erfindungsgemäßen Verfahren eingesetzte Computerprogramm so ausgestaltet ist, dass der Benutzer in dem Schritt b) Werte sowohl für den Vollton als auch für mindestens einen Halbton vorgeben (messen, einlesen) kann.

Insbesondere am Anfang des Aufbaus der für das erfindungsgemäße Verfahren eingesetzten Datenbank, in der diese noch nicht Datensätze für alle möglichen Kombinationen an Applikationsverfahren, Substrat und Farbton nebst den etwaigen weiteren optionalen Charakteristika i) bis xviii) enthält, wird es unvermeidlich sein, dass für eine spezielle Kombination von in dem Schritt b) eingegebenen Zielapplikationsverfahren, Zielsubstrat und Zielfarbton in dem Verfahrensschritt c) kein geeigneter Datensatz gefunden wird. Um auch in diesem Fall dem Benutzer eine Farbrezeptur anzugeben, mit der er sein gewünschtes Projekt durchführen kann, wird es vorgeschlagen, dass das Computerprogramm einen Rezeptieralgorithmus umfasst, welcher es erlaubt, eine Farbrezeptur zu errechnen, welche nach der Applikation mit dem vorgegebenen Zielapplikationsverfahren auf das vorgegebene Zielsubstrat mit einer vorgegebenen maximalen Toleranz den für das Zielfarbprodukt vorgegebenen Farbton ergibt.

Das Computerprogramm ist so ausgestaltet, dass der die Farbrezeptur errechnende Rezeptieralgorithmus durchgeführt wird, wenn in dem Schritt c) kein geeigneter Datensatz gefunden wurde.

Ferner werden vor dem Durchführen des die Farbrezeptur errechnenden Rezeptieralgorithmus von dem Computerprogramm in Bezug auf die Vorgaben des Benutzers geeignete Komponenten für die Farbrezeptur an den Rezeptieralgorithmus übertragen aus denen allein der Rezeptieralgorithmus die Farbrezeptur errechnet. Unter Komponenten für die Farbrezeptur werden dabei Rohstoffe, Halbfertigprodukte und/oder Fertigprodukte verstanden, die in der Datenbank zusammen mit deren Eigenschaften und Farbeigenschaften gespeichert sind. Dies ermöglicht es, dass eine Farbrezeptur errechnet wird, mit welcher der Benutzer nicht nur den gewünschten Zielfarbton erhält, sondern welche insbesondere auch die weiteren vorgegebenen Charakteristika, wie ein oder mehrere der Charakteristika i) bis xviii) erfüllt. Gibt beispielsweise der Benutzer in dem Schritt b) eine bestimmten zu erzielende Chemikalienbeständigkeit beispielsweise gegenüber Säuren vor, übertragt das Computerprogramm nur diejenigen Komponenten, also Rohstoffe, Halbfertigprodukte und/oder Fertigprodukte, an den Rezeptieralgorithmus weiter, welche diese Chemikalienbeständigkeit aufweisen.

Bei der vorliegenden Erfindung ist es zudem bevorzugt, dass die von dem Computerprogramm an den Rezeptieralgorithmus übertragenen Komponenten für die Farbrezeptur insbesondere wenigstens einen, bevorzugt wenigstens drei, weiter bevorzugt wenigstens fünf, besonders bevorzugt wenigstens zehn, ganz besonders bevorzugt wenigstens fünfzehn und höchst bevorzugt alle der von dem Benutzer vorgegebenen Kriterien i) bis xvi) erfüllen.

Gemäß einer weiteren ganz besonders bevorzugten Ausführungsform der vorliegenden Erfindung ist es vorgesehen, dass wenigstens 10%, bevorzugt wenigstens 20%, besonders bevorzugt wenigstens 40%, weiter bevorzugt wenigstens 60%, ganz besonders bevorzugt wenigstens 80% und höchst bevorzugt alle der Datensätze auch Informationen über die Spektralkurve der Oberfläche eines ersten Produktionsfarbprodukts umfassen, welches erhalten worden ist durch beispielsweise Aufstreichen eines Teils einer ersten Produktionscharge der in dem Schritt d) angezeigten Farbrezeptur auf ein weißes Aufstrichpapier und Aufnehmen einer Spektralkurve, besonders bevorzugt einer spektralen Reflexionskurve zwischen 180 bis 4000 nm, bevorzugt zwischen 400 und 700 nm der Oberfläche hiervon mit einem Spektralphotometer. Die erste Produktionscharge kann außer mit Aufstreichen auch mit jedem anderen Applikationsverfahren auf das Substrat, vorzugsweise Papier, aufgebracht werden, wie beispielsweise mit Laborandrucken, Spritzlackieren oder Rakelaufzügen. Diese Ausführungsform erleichtert die Qualitätskontrolle bei jeder weiteren hergestellten Produktionscharge. Bei jeder weiteren Produktionscharge kann dann nämlich zur Qualitätskontrolle ein Teil der weiteren Produktionscharge der Farbrezeptur auf dasselbe Aufstrichpapier aufgestrichen werden von der Oberfläche des so erhaltenen Farbprodukts eine Spektralkurve unter den gleichen Bedingungen aufgenommen werden, wie dies für die erste Produktionscharge erfolgt ist. Die so erhaltene Spektralkurve muss dann lediglich mit der im dem Datensatz gespeicherten Spektralkurve verglichen werden. Wenn die bei diesem Vergleich erhaltene Abweichung in einem vorgegebenen Toleranzbereich liegt, kann die Charge freigegeben werden. Andernfalls muss diese so lange durch Zugabe einer oder mehrerer Bestandteile korrigiert werden, bis für ein damit hergestelltes Referenzfarbprodukt ein im Toleranzbereich liegender Farbton erhalten wird.

In Weiterbildung des Erfindungsgedankens wird es vorgeschlagen, dass bei dieser Ausführungsform wenigstens 10%, weiter bevorzugt wenigstens 20%, besonders bevorzugt wenigstens 40%, noch weiter bevorzugt wenigstens 60%, ganz besonders bevorzugt wenigstens 80% und höchst bevorzugt alle der Datensätze auch die Spektralkurve der Oberfläche eines zweiten Produktionsfarbprodukts umfassen, welches erhalten worden ist durch beispielsweise Aufstreichen eines Teils einer zweiten Produktionscharge der in dem Schritt d) angezeigten Farbrezeptur auf ein weißes Aufstrichpapier und Aufnehmen einer Spektralkurve zwischen 180 bis 4000 nm, bevorzugt zwischen 400 und 700 nm der Oberfläche hiervon mit einem Spektralphotometer. Die zweite Produktionscharge kann außer mit Aufstreichen auch mit jedem anderen Applikationsverfahren auf das Substrat, vorzugsweise Papier, aufgebracht werden, wie beispielsweise mit Laborandrucken oder Rakelaufzügen.

Zudem ist es bei dieser Ausführungsform der vorliegenden Erfindung bevorzugt, dass die Datensätze zusätzlich zu der Spektralkurve des zweiten Produktionsfarbprodukts die Spektralkurve eines mit einer Rückstellprobe der ersten Produktionscharge hergestellten Farbprodukts umfassen, welches erhalten worden ist durch Aufstreichen eines Teils einer Rückstellprobe der ersten Produktionscharge der in dem Schritt d) angezeigten Farbrezeptur auf ein weißes Aufstrichpapier und Aufnehmen einer Spektralkurve zwischen 180 bis 4000 nm, bevorzugt zwischen 400 und 700 nm der Oberfläche hiervon mit einem Spektralphotometer gleichzeitig mit dem Aufstreichen und Aufnehmen der Spektralkurve des Teils der zweiten Produktionscharge der in dem Schritt d) angezeigten Farbrezeptur. Indem beide Proben gleichzeitig auf dasselbe weiße Aufstrichpapier aufgestrichen und verglichen wurden, lässt sich die Genauigkeit der Qualitätskontrolle noch weiter erhöhen.

In Weiterbildung des Erfindungsgedankens wird es vorgeschlagen, dass zumindest einer, vorzugsweise wenigstens 10%, weiter bevorzugt wenigstens 50%, besonders bevorzugt wenigstens 80%, weiter bevorzugt wenigstens 90%, ganz besonders bevorzugt wenigstens 95% und höchst bevorzugt alle der Datensätze Informationen über wenigstens einen Referenzfarbton, ein Referenzapplikationsverfahren sowie ein Referenzsubstrat umfassen, wobei sich der Referenzfarbton ergibt, wenn die Farbrezeptur, über die in dem Datensatz Informationen enthalten sind, mit dem Referenzapplikationsverfahren auf das Referenzsubstrat appliziert wird, wobei das Referenzapplikationsverfahren von dem Applikationsverfahren, über das in dem Datensatz Informationen enthalten sind, verschieden und/oder das Referenzsubstrat von dem Substrat, über das in dem Datensatz Informationen enthalten sind, verschieden ist.

Indem zumindest einer der Datensätze, bevorzugt eine Vielzahl der Datensätze und besonders bevorzugt alle Datensätze auch Informationen über wenigstens einen Referenzfarbton, ein Referenzapplikationsverfahren sowie ein Referenzsubstrat umfassen, kann eine hergestellte Charge der Farbrezeptur einfach einer zuverlässigen Qualitätskontrolle unterzogen werden. Es muss nämlich nur eine entsprechende Menge der hergestellten Charge der Farbrezeptur mit dem Referenzapplikationsverfahren auf das Referenzsubstrat aufgebracht werden und dann der Farbton des so hergestellten Referenzfarbprodukts mit dem Referenzfarbton, über den in dem Datensatz Informationen enthalten sind, verglichen werden. Wenn die bei diesem Vergleich erhaltene Abweichung in einem vorgegebenen Toleranzbereich liegt, kann die Charge freigegeben werden. Andernfalls muss diese so lange durch Zugabe einer oder mehrerer Bestandteile korrigiert werden, bis für ein damit hergestelltes Referenzfarbprodukt ein im Toleranzbereich liegender Farbton erhalten wird. Ein besonderer Vorteil des erfindungsgemäßen Verfahrens liegt darin, dass es die Qualitätskontrolle nicht erfordert, dass der Farbenhersteller die hergestellte Farbrezeptur mit dem von dem Kunden vorgegebenen (in der Regel eine komplexe Anlage erfordernden) Zielapplikationsverfahren auf das von dem Kunden vorgegebene (unter Umständen sehr spezielle und kommerziell schlecht verfügbare) Zielsubstrat aufbringt, sondern er lediglich ein Referenzsubstrat, welches beispielsweise ein auf der ganzen Welt verfügbares und gängiges Normpapier ist, mit einem (vorzugsweise einfachen und keine komplexe Anlage erfordernden) Referenzapplikationsverfahren aufbringen muss. Andernfalls müsste der Farbenhersteller für jede einzelne Farbrezeptur das entsprechende von dem Kunden vorgegebene Zielsubstrat, welches an seinem Standort möglicherweise gar nicht oder nur sehr schwer erhältlich ist, beschaffen und das spezielle von dem Kunden vorgegebene Zielapplikationsverfahren verwenden. Der Farbenhersteller, der eine Vielzahl verschiedenster Farbrezepturen herstellt, bräuchte in diesem Fall ein enorm großes Lager mit einer Vielzahl verschiedenster, unter Umständen schwer erhältlicher Zielsubstrate sowie eine Vielzahl von verschiedensten Applikationsanlagen, wie beispielsweise eine Rollenoffsetdruckmaschine, eine Tiefdruckmaschine und dergleichen. Erfindungsgemäß reicht hingegen unter Umständen ein Referenzsubstrat und ein Referenzapplikationsverfahren aus, wenn für alle in der Datenbank verfügbaren Farbrezepturen dasselbe Referenzsubstrat und Referenzapplikationsverfahren gespeichert sind. Unter Umständen werden mehrere Referenzapplikationsverfahren benötigt, beispielsweise bedingt durch die Konsistenz der Farben (pastös, flüssig, pulverförmig). Unter Normpapier wird im Sinne der vorliegenden Erfindung ein Papier verstanden, welches in einem nationalen oder internationalen Standard normiert ist. Beispiele für geeignete Normpapiere sind in der Norm DIN ISO 2846-1: 2017 spezifizierte Papiere. Werden beispielsweise Flüssigfarben auf transparenter Folie appliziert, so kann vor der Aufnahme der Spektralkurve ein Normpapier unterlegt werden, um so ebenfalls standardisierte Bedingungen für die Aufnahme der Spektralkurve zu gewährleisten.

Bezüglich der Anzahl der pro Datensatz enthaltenen Referenzfarbtöne ist die vorliegende Erfindung nicht besonders limitiert. Daher können einige der Datensätze jeweils Informationen über einen Referenzfarbton enthalten sowie das dazu gehörige Referenzapplikationsverfahren und das dazu gehörige Referenzsubstrat und andere Datensätze jeweils Informationen über zwei oder mehr verschiedene Referenzfarbtöne sowie die dazu gehörigen Referenzapplikationsverfahren und Referenzsubstrate enthalten, die jeweils mit einem anderen Applikationsverfahren und/oder auf einem anderen Substrat den gleichen Zielfarbton ergeben.

In Weiterbildung des Erfindungsgedankens wird es vorgeschlagen, dass in dem Schritt d) auch der wenigstens eine Referenzfarbton des mindestens einen Datensatzes angezeigt wird. Der Benutzer kann diesen dann für die spätere Qualitätskontrolle einsetzen oder speichern, sofern er die Farbrezeptur herstellt, oder dem Dienstleister, den er die Farbrezeptur herstellen lässt, weitergeben. Der wenigstens eine Referenzfarbton kann in jeder Form angegeben werden, welcher den Referenzfarbton eindeutig charakterisiert. Beispielsweis kann der wenigstens eine Referenzfarbton als Lab-Werte (oder Werte eines anderen Farbraumes, wie LUV-Werte, RGB-Werte, LCh-Werte, XYZ-Werte oder dergleichen), als Spektralkurve (insbesondere spektrale Reflexionskurve) zwischen 180 und 4000 nm und bevorzugt zwischen 400 und 700 nm oder als Daten einer Spektralkurve (insbesondere spektrale Reflexionskurve) zwischen 180 und 4000 nm und bevorzugt zwischen 400 und 700 nm angezeigt werden.

Ein weiterer Gegenstand der vorliegenden Erfindung ist eine Datenverarbeitungsvorrichtung zum Ermitteln einer Farbrezeptur wie im beigefügten Anspruchssatz dargelegt.

Vorzugsweise umfasst die Datenbank mehr als 10 Datensätze, weiter bevorzugt mehr als 100 Datensätze, noch weiter bevorzugt mehr als 1.000 Datensätze, besonders bevorzugt mehr als 10.000 Datensätze, besonders bevorzugt mehr als 100.000 Datensätze, ganz besonders bevorzugt mehr als 500.000 Datensätze und höchst bevorzugt eine Million Datensätze oder mehr.

## Patentansprüche

1. Verfahren zum Ermitteln einer Farbrezeptur, welche nach der Applikation mit einem vorgegebenen Applikationsverfahren auf ein vorgegebenes Substrat ein Farbprodukt mit einem vorgegebenen Farbton ergibt, wobei das Verfahren umfasst:
a) Bereitstellen einer Datenbank, in der eine Vielzahl von Datensätzen gespeichert ist, wobei
i) zumindest ein Teil jeder der Datensätze jeweils zumindest Informationen über eine Farbrezeptur einschließlich eines Farbrezepturidentifikationscodes, ein Substrat, ein Applikationsverfahren und den Farbton des sich nach der Applikation der Farbrezeptur mit dem Applikationsverfahren auf das Substrat ergebenden Farbprodukts einschließlich eines Farbtonidentifikationscodes umfasst,
ii) die Datenbank für mindestens einen Farbton jeweils mindestens zwei verschiedene der in i) genannten Datensätze mit jeweils demselben Farbtonidentifikationscode, dem gleichen Farbton des sich ergebenden Farbprodukts und Informationen über voneinander verschiedene Farbrezepturen umfasst, wobei sich das Substrat und/oder das Applikationsverfahren von zumindest einem der mindestens zwei verschiedenen Datensätze von dem Substrat und/oder Applikationsverfahren von einem anderen der mindestens zwei verschiedenen Datensätze unterscheidet, und
iii) die Datenbank für mindestens eine Farbrezeptur jeweils mindestens zwei verschiedene der in i) genannten Datensätze mit jeweils demselben Farbrezepturidentifikationscode und Informationen über die gleiche Farbrezeptur umfasst, wobei sich das Substrat von zumindest einem der mindestens zwei verschiedenen Datensätze von dem Substrat eines anderen der mindestens zwei verschiedenen Datensätze unterscheidet, und wobei sich der Farbton des Farbprodukts von zumindest einem der mindestens zwei verschiedenen Datensätze von dem Farbton des Farbprodukts eines anderen der mindestens zwei verschiedenen Datensätze unterscheidet,
b) Bereitstellen eines Computerprogramms, welches die Datenbank a) benutzt und Vorgeben eines Zielapplikationsverfahrens, eines Zielsubstrates sowie eines gewünschten, sich nach der Applikation einer Farbrezeptur mit dem vorgegebenen Zielapplikationsverfahren auf das vorgegebene Zielsubstrat für das erhaltene Farbprodukt ergebenden Zielfarbtons durch einen Benutzer in das Computerprogramm,
c) Durchsuchen der Datenbank mit diesem Computerprogramm, ob diese mindestens einen Datensatz enthält, dessen Farbrezeptur nach der Applikation mit dem in dem Schritt b) vorgegebenen Zielapplikationsverfahren auf das Zielsubstrat ein Farbprodukt mit einem Farbton ergibt, der dem Zielfarbton entspricht oder maximal mit einer vorgegebenen Toleranz von diesem abweicht, und
d) wenn in dem Schritt c) mindestens ein geeigneter Datensatz gefunden wird, Anzeigen der in dem mindestens einen Datensatz gespeicherten Informationen über die Farbrezeptur,
wobei das Computerprogramm einen Rezeptieralgorithmus umfasst, welcher eine Farbrezeptur errechnen kann, welche nach der Applikation mit dem vorgegebenen Zielapplikationsverfahren auf das vorgegebene Zielsubstrat mit einer vorgegebenen maximalen Toleranz den für das Zielfarbprodukt vorgegebenen Farbton ergibt, wobei das Computerprogramm so ausgestaltet ist, dass der die Farbrezeptur errechnende Rezeptieralgorithmus durchgeführt wird, wenn in dem Schritt c) kein geeigneter Datensatz gefunden wurde, und vor dem Durchführen des die Farbrezeptur errechnenden Rezeptieralgorithmus von dem Computerprogramm in Bezug auf die Vorgaben des Benutzers geeignete Komponenten für die Farbrezeptur an den Rezeptieralgorithmus übertragen werden, aus denen allein der Rezeptieralgorithmus die Farbrezeptur errechnet, und
wobei das Computerprogramm bei der Anlage eines neuen Datensatzes in die Datenbank durch einen Benutzer automatisch prüft, ob für die zu speichernde Farbrezeptur innerhalb des vorgenannten Toleranzbereiches bereits mindestens ein Datensatz enthalten ist oder nicht, wobei, falls nicht, der neue Datensatz angelegt wird sowie in diesem ein neu vergebener Farbrezepturidentifikationscode gespeichert, und, falls ja, des Weiteren geprüft wird, ob der mindestens eine Datensatz Informationen über dasselbe Substrat, über dasselbe Applikationsverfahren und über den gleichen sich nach der Applikation der Farbrezeptur mit dem Applikationsverfahren auf das Substrat ergebenden Farbton enthält, wobei, wenn ja, der Benutzer eine Mitteilung erhält, dass in der Datenbank bereits ein entsprechender Datensatz enthalten ist und dann der anzulegende Datensatz nicht angelegt, und, wenn nein, in dem neu anzulegenden Datensatz derselbe Farbrezepturidentifikationscode gespeichert wird, und wobei das Computerprogramm für Datensätze, welche zu Farbprodukten mit innerhalb des Toleranzbereichs liegenden gleichen Farbtönen führen, den gleichen Farbtonidentifikationscode vergibt, wobei in der Datenbank zwei Farbtöne als gleich bewertet sind, wenn diese voneinander um einen Delta E-Wert von maximal 0,5 abweichen, zwei Farbtöne als verschieden bewertet sind, wenn diese mehr voneinander abweichen, zwei Farbrezepturen als gleich bewertet sind, wenn diese die gleichen farbgebenden Bestandteile aufweisen und bezüglich der Mengen der einzelnen farbgebenden Bestandteile voneinander um maximal 1 % pro farbgebenden Bestandteil abweichen, und zwei Farbrezepturen als verschieden bewertet sind, wenn diese mehr voneinander abweichen.

2. Verfahren nach Anspruch 1, **dadurch gekennzeichnet, dass** in der Datenbank zwei Farbtöne als gleich bewertet sind, wenn diese voneinander um einen ΔE₀₀-Wert von maximal 0,5 und einen dH* von maximal 0,5 abweichen und besonders bevorzugt um einen ΔE₀₀-Wert von maximal 0,2 und einen dH* von maximal 0,2 abweichen, und zwei Farbtöne als verschieden bewertet sind, wenn diese voneinander um einen ΔE₀₀-Wert von mehr als 0,5 abweichen.

3. Verfahren nach Anspruch 1 oder 2, **dadurch gekennzeichnet, dass** die Datenbank für wenigstens 10%, bevorzugt für wenigstens 20%, besonders bevorzugt für wenigstens 50%, weiter bevorzugt für wenigstens 70%, ganz besonders bevorzugt für wenigstens 90% und höchst bevorzugt für alle Farbtöne jeweils mindestens zwei verschiedene Datensätze umfasst, welche jeweils denselben Farbtonidentifikationscode und Informationen über voneinander verschiedene Farbrezepturen, über ein Substrat sowie über ein Applikationsverfahren umfassen, wobei sich das Substrat und/oder Applikationsverfahren von jedem der mindestens zwei verschiedenen Datensätze von dem Substrat und/oder Applikationsverfahren von jedem anderen der mindestens zwei verschiedenen Datensätze unterscheidet, wobei für jede der voneinander verschiedenen Farbrezepturen der mindestens zwei verschiedenen Datensätze nach der Applikation der jeweiligen Farbrezeptur mit dem in dem jeweiligen Datensatz gespeicherten Applikationsverfahren auf das in dem jeweiligen Datensatz gespeicherte Substrat jeweils ein Farbprodukt mit dem gleichen Farbton erhalten wird.

4. Verfahren nach Anspruch 3, **dadurch gekennzeichnet, dass** die Datenbank für den mindestens einen Farbton jeweils mindestens vier verschiedene, bevorzugt mindestens sechs verschiedene, besonders bevorzugt mindestens zehn verschiedene und ganz besonders bevorzugt mindestens zwanzig verschiedene Datensätze umfasst, welche jeweils denselben Farbtonidentifikationscode und Informationen über voneinander verschiedene Farbrezepturen, über ein Substrat sowie über ein Applikationsverfahren umfassen, wobei sich das Substrat und/oder Applikationsverfahren von jedem der mindestens vier verschiedenen Datensätze von dem Substrat und/oder Applikationsverfahren von jedem anderen der mindestens vier verschiedenen Datensätze unterscheidet, wobei für jede der voneinander verschiedenen Farbrezepturen der mindestens vier verschiedenen Datensätze nach der Applikation der jeweiligen Farbrezeptur mit dem in dem jeweiligen Datensatz gespeicherten Applikationsverfahren auf das in dem jeweiligen Datensatz gespeicherte Substrat jeweils ein Farbprodukt mit dem gleichen Farbton erhalten wird.

5. Verfahren nach zumindest einem der vorhergehenden Ansprüche, **dadurch gekennzeichnet, dass** jeder Datensatz, für welchen nach der Applikation der in dem jeweiligen Datensatz gespeicherten Farbrezeptur mit dem in dem jeweiligen Datensatz gespeicherten Applikationsverfahren auf das in dem jeweiligen Datensatz gespeicherte Substrat ein Farbprodukt mit einem von dem für mindestens einen anderen Datensatz erhaltenen verschiedenen Farbton erhalten wird, ein anderer Farbtonidentifikationscode gespeichert ist als in allen anderen des mindestens einen anderen Datensatzes.

6. Verfahren nach zumindest einem der vorhergehenden Ansprüche, **dadurch gekennzeichnet, dass** das Computerprogramm einen Testalgorithmus umfasst, welcher einen Farbton simulieren kann, welcher nach dem Ausdrucken der Simulation mit einem Computer über einen Testpapierdrucker auf ein Testpapiersubstrat denselben Farbton ergibt, wie die Applikation der in dem Schritt c) gefundenen Farbrezeptur mit dem in dem Schritt b) vorgegebenen Zielapplikationsverfahren auf das in dem Schritt b) vorgegebene Zielsubstrat, wobei der Testpapierdrucker ein Tintenstrahldrucker oder Laserdrucker ist.

7. Verfahren nach zumindest einem der vorhergehenden Ansprüche, **dadurch gekennzeichnet, dass** die Datenbank für wenigstens 10%, bevorzugt für wenigstens 20%, besonders bevorzugt für wenigstens 50%, weiter bevorzugt für wenigstens 70%, ganz besonders bevorzugt für wenigstens 90% und höchst bevorzugt für alle Farbrezepturen jeweils mindestens zwei verschiedene Datensätze umfasst, welche jeweils denselben Farbrezepturidentifikationscode und Informationen über die gleiche Farbrezeptur, über ein Substrat, über ein Applikationsverfahren sowie über einen sich nach der Applikation der in dem jeweiligen Datensatz gespeicherten Farbrezeptur mit dem in dem jeweiligen Datensatz gespeicherten Applikationsverfahren auf das in dem jeweiligen Datensatz gespeicherte Substrat für das Farbprodukt ergebenden Farbton umfassen, wobei sich das Substrat von jedem der mindestens zwei verschiedenen Datensätze von dem Substrat von jedem anderen der mindestens zwei verschiedenen Datensätze unterscheidet, und wobei sich nach der Applikation der jeweiligen Farbrezeptur mit dem in dem jeweiligen Datensatz gespeicherten Applikationsverfahren auf das in dem jeweiligen Datensatz gespeicherte Substrat jeweils ein Farbprodukt ergibt, wobei sich der Farbton des Farbprodukts von jedem der mindestens zwei verschiedenen Datensätze von dem Farbton der Farbprodukte aller anderen der mindestens zwei verschiedenen Datensätze unterscheidet.

8. Verfahren nach Anspruch 7, **dadurch gekennzeichnet, dass** die Datenbank für die mindestens eine Farbrezeptur jeweils mindestens vier verschiedene, bevorzugt mindestens sechs verschiedene, besonders bevorzugt mindestens zehn verschiedene und ganz besonders bevorzugt mindestens zwanzig verschiedene Datensätze umfasst, welche jeweils denselben Farbrezepturidentifikationscode und Informationen über die gleiche Farbrezeptur, über ein Substrat, über ein Applikationsverfahren sowie über einen sich nach der Applikation der in dem jeweiligen Datensatz gespeicherten Farbrezeptur mit dem in dem jeweiligen Datensatz gespeicherten Applikationsverfahren auf das in dem jeweiligen Datensatz gespeicherte Substrat für das Farbprodukt ergebenden Farbton umfassen, wobei sich das Substrat oder das Applikationsverfahren von jedem der mindestens vier verschiedenen Datensätze von dem Substrat von jedem anderen der mindestens vier verschiedenen Datensätze unterscheidet, und wobei sich nach der Applikation der jeweiligen Farbrezeptur mit dem in dem jeweiligen Datensatz gespeicherten Applikationsverfahren auf das in dem jeweiligen Datensatz gespeicherte Substrat jeweils ein Farbprodukt ergibt, wobei sich der Farbton des Farbprodukts von jedem der mindestens vier verschiedenen Datensätze von dem Farbton der Farbprodukte aller anderen der mindestens vier verschiedenen Datensätze unterscheidet.

9. Verfahren nach zumindest einem der vorhergehenden Ansprüche, **dadurch gekennzeichnet, dass** wenigstens 10%, bevorzugt wenigstens 25%, weiter bevorzugt wenigstens 50%, noch weiter bevorzugt wenigstens 75%, ganz besonders bevorzugt wenigstens 90% und höchst bevorzugt alle der mindestens zwei verschiedenen Datensätze, in denen jeweils derselbe Farbrezepturidentifikationscode gespeichert ist, auch Informationen für mindestens einen weiteren Parameter enthalten, wobei diese Informationen über den mindestens einen weiteren Parameter für die Farbrezeptur charakteristisch sind und in allen der mindestens zwei verschiedenen Datensätze identisch sind, wobei der mindestens eine weitere Parameter vorzugsweise aus der Gruppe ausgewählt ist, die aus Beständigkeit der Farbrezeptur gegenüber Licht, gegenüber Temperatur, gegenüber gamma-Strahlen, gegenüber Chemikalien, gegenüber Pasteurisation, gegenüber Sterilisation, gegenüber Feuchtigkeit und beliebigen Kombinationen von zwei oder mehr der vorgenannten besteht.

10. Verfahren nach zumindest einem der vorstehenden Ansprüche, **dadurch gekennzeichnet, dass** zumindest ein Teil der Datensätze auch Angaben zu einem Überlack und/oder Primer enthält, wobei der in dem jeweilige Datensatz gespeicherte Farbton derjenige des Farbprodukts ist, welches erhalten wird, indem die in dem Datensatz gespeicherte Farbrezeptur mit dem in dem Datensatz gespeicherten Applikationsverfahren auf das in dem Datensatz gespeicherte Substrat gedruckt wird und dann der in dem Datensatz gespeicherte Überlack und/oder Primer aufgebracht wird, und das Computerprogramm so ausgestaltet ist, dass der Benutzer in dem Schritt b) einen Überlack und/oder Primer sowie eine Menge für den aufzubringenden Überlack und/oder Primer vorgeben kann.

11. Verfahren nach zumindest einem der vorstehenden Ansprüche, **dadurch gekennzeichnet, dass** wenigstens 10%, bevorzugt wenigstens 25%, weiter bevorzugt wenigstens 50%, noch weiter bevorzugt wenigstens 75%, ganz besonders bevorzugt wenigstens 90% und höchst bevorzugt alle der Datensätze auch Informationen über wenigstens eines der folgenden Charakteristika enthält:
i) ein oder mehrere Halbtöne,
ii) Glanzstufe des Farbprodukts,
iii) verschiedene Glanzstufen bei verschiedenen Betrachtungswinkeln des Farbprodukts,
iv) haptische Eigenschaften des Farbprodukts,
v) Kratzfestigkeit des Farbprodukts,
vi) Reißfestigkeit des Farbprodukts,
vii) Zugfestigkeit des Farbprodukts,
viii) Beständigkeit des Farbprodukts gegenüber Licht,
ix) Beständigkeit des Farbprodukts gegenüber Temperatur,
x) Beständigkeit des Farbprodukts gegenüber gamma-Strahlen,
xi) Beständigkeit des Farbprodukts gegenüber Chemikalien,
xii) Beständigkeit des Farbprodukts gegenüber Pasteurisation,
xiii) Beständigkeit des Farbprodukts gegenüber Sterilisation,
xiv) Beständigkeit des Farbprodukts gegenüber Feuchtigkeit,
xv) Beständigkeit des Farbprodukts gegenüber Delamination,
xvi) Abwesenheit von bestimmten Inhaltsstoffen in der Farbrezeptur,
xvii) Opazität des Farbprodukts,
xviii) Gleiteigenschaften des Farbprodukts.

12. Verfahren nach Anspruch 11, **dadurch gekennzeichnet, dass** wenigstens 10%, bevorzugt wenigstens 50%, besonders bevorzugt wenigstens 80%, weiter bevorzugt wenigstens 90%, ganz besonders bevorzugt wenigstens 95% und höchst bevorzugt alle der in der Datenbank enthaltenen Datensätze Informationen über mindestens zwei Halbtöne umfassen, wobei die Informationen über jeden der mindestens zwei Halbtöne zumindest Informationen über den jeweiligen Farbton enthalten, den das jeweilige Farbprodukt aufweist, das erhalten wird, wenn die Farbrezeptur, über die in dem entsprechenden Datensatz Informationen gespeichert sind, als jeweiliger Halbton mit dem Zielapplikationsverfahren auf das Zielsubstrat appliziert wird.

13. Datenverarbeitungsvorrichtung zum Ermitteln einer Farbrezeptur, welche nach der Applikation mit einem vorgegebenen Applikationsverfahren auf ein vorgegebenes Substrat ein Farbprodukt mit einem vorgegebenen Farbton ergibt, wobei die Datenverarbeitungsvorrichtung Mittel zur Ausführung des Verfahrens nach Anspruch 1 umfasst.

## Claims

1. A method for ascertaining a color formulation which, after application to a specified substrate using a specified application method, results in a color product having a specified hue, wherein the method comprises:
a) providing a database in which a plurality of data sets are stored, wherein
i) at least a part of each of the data sets in each case at least comprises information about a color formulation, including a color formulation identification code, a substrate, an application method and the hue of the color product resulting after the application of the color formulation to the substrate using the application method, including a hue identification code,
ii) the database, for at least one hue, in each case comprises at least two different data sets of those mentioned in i), which each have the same hue identification code, the same hue of the resulting color product and information about different color formulations, wherein the substrate and/or the application method of at least one of the at least two different data sets differs from the substrate and/or the application method of another of the at least two different data sets, and
iii) the database, for at least one color formulation, in each case comprises at least two different data sets of those mentioned in i), which each have the same color formulation identification code and information about the same color formulation, wherein the substrate of at least one of the at least two different data sets differs from the substrate of another of the at least two different data sets, and wherein the hue of the color product of at least one of the at least two different data sets differs from the hue of the color product of another of the at least two different data sets,
b) providing a computer program which uses the database a) and specification, by a user in the computer program, of a target application method, a target substrate, and a desired target hue resulting for the obtained color product after the application of a color formulation to the specified target substrate using the specified target application method,
c) searching the database with this computer program to see whether it contains at least one data set of which the color formulation, after application to the target substrate using the target application method specified in step b), results in a color product having a hue which corresponds to the target hue or deviates therefrom at most with a specified tolerance, and
d) if at least one suitable data set is found in step c), displaying the information about the color formulation stored in the at least one data set,
wherein the computer program comprises a formulation algorithm which can calculate a color formulation which, after the application to the specified target substrate using the specified target application method, results in the hue specified for the target color product with a specified maximum tolerance, wherein the computer program is configured such that the formulation algorithm that calculates the color formulation is executed if no suitable data set was found in step c), and, before the execution of the formulation algorithm that calculates the color formulation, suitable components for the color formulation are transferred from the computer program to the formulation algorithm based on the specifications of the user, from which components the formulation algorithm alone calculates the color formulation, and
wherein when the user creates a new data set in the database, the computer program automatically checks whether or not at least one data set is already contained for the color formulation to be stored within the aforementioned tolerance range, wherein, if not, the new data set is created and a newly assigned color formulation identification code is stored therein, and, if so, it is also checked whether the at least one data set contains information about the same substrate, about the same application method and about the same hue resulting after the application of the color formulation to the substrate using the application method, wherein, if so, the user receives a notification that the database already contains a corresponding data set and then the data set to be created is not created, and if not, the same color formulation identification code is stored in the data set to be newly created, and wherein the computer program assigns the same hue identification code to data sets that lead to color products having the same hues within the tolerance range, wherein two hues are assessed as the same in the database if they differ from one another by a Delta E value of at most 0.5, two hues are assessed as different if they differ from one another to a greater extent, two color formulations are assessed as the same if they contain the same coloring components and differ from one another with regard to the quantities of the individual coloring components by at most 1% per coloring component, and two color formulations are assessed as different if they differ from one another to a greater extent.

2. The method according to claim 1, **characterized in that** two hues are assessed as the same in the database if they differ from one another by a ΔE₀₀ value of at most 0.5 and a dH* of at most 0.5, and particularly preferably by a ΔE₀₀ value of at most 0.2 and a dH* of at most 0.2, and two hues are assessed as different if they differ from one another by a ΔE₀₀ value of more than 0.5.

3. The method according to claim 1 or 2, **characterized in that** the database, for at least 10%, preferably for at least 20%, particularly preferably for at least 50%, more preferably for at least 70%, very particularly preferably for at least 90% and most preferably for all of the hues, in each case comprises at least two different data sets, each of which comprises the same hue identification code and information about color formulations which differ from one another, about a substrate and about an application method, wherein the substrate and/or application method of each of the at least two different data sets differs from the substrate and/or application method of each other of the at least two different data sets, wherein for each of the different color formulations of the at least two different data sets, a color product having the same hue is obtained in each case after the application of the relevant color formulation to the substrate stored in the relevant data set using the application method stored in the relevant data set.

4. The method according to claim 3, **characterized in that** the database, for the at least one hue, in each case comprises at least four different, preferably at least six different, particularly preferably at least ten different and very particularly preferably at least twenty different data sets, each of which comprises the same hue identification code and information about color formulations which differ from one another, about a substrate and about an application method, wherein the substrate and/or application method of each of the at least four different data sets differs from the substrate and/or application method of each other of the at least four different data sets, wherein for each of the different color formulations of the at least four different data sets, a color product having the same hue is obtained in each case after the application of the relevant color formulation to the substrate stored in the relevant data set using the application method stored in the relevant data set.

5. The method according to at least one of the preceding claims, **characterized in that** in each data set for which, after the application of the color formulation stored in the relevant data set to the substrate stored in the relevant data set using the application method stored in the relevant data set, a color product is obtained which has a hue different from the one obtained for at least one other data set, a different hue identification code is stored than in all others of the at least one other data set.

6. The method according to at least one of the preceding claims, **characterized in that** the computer program comprises a test algorithm which can simulate a hue which, after the simulation is printed out on a test paper substrate by means of a computer via a test paper printer, results in the same hue as the application of the color formulation found in step c) to the target substrate specified in step b) using the target application method specified in step b), wherein the test paper printer is an inkjet printer or laser printer.

7. The method according to at least one of the preceding claims, **characterized in that** the database, for at least 10%, preferably for at least 20%, particularly preferably for at least 50%, more preferably for at least 70%, very particularly preferably for at least 90% and most preferably for all of the color formulations, in each case comprises at least two different data sets, each of which comprises the same color formulation identification code and information about the same color formulation, about a substrate, about an application method and about a hue resulting for a color product after the application of the color formulation stored in the relevant data set to the substrate stored in the relevant data set using the application method stored in the relevant data set, wherein the substrate of each of the at least two different data sets differs from the substrate of each other of the at least two different data sets, and wherein, after the application of the relevant color formulation to the substrate stored in the relevant data set using the application method stored in the relevant data set, a color product results, wherein the hue of the color product of each of the at least two different data sets differs from the hue of the color products of all of the others of the at least two different data sets.

8. The method according to claim 7, **characterized in that** the database, for the at least one color formulation, in each case comprises at least four different, preferably at least six different, particularly preferably at least ten different and very particularly preferably at least twenty different data sets, each of which comprises the same color formulation identification code and information about the same color formulation, about a substrate, about an application method and about a hue resulting for a color product after the application of the color formulation stored in the relevant data set to the substrate stored in the relevant data set using the application method stored in the relevant data set, wherein the substrate and/or the application method of each of the at least four different data sets differs from the substrate of each other of the at least four different data sets, and wherein, after the application of the relevant color formulation to the substrate stored in the relevant data set using the application method stored in the relevant data set, a color product results, wherein the hue of the color product of each of the at least four different data sets differs from the hue of the color products of all of the others of the at least four different data sets.

9. The method according to at least one of the preceding claims, **characterized in that** at least 10%, preferably at least 25%, more preferably at least 50%, even more preferably at least 75%, very particularly preferably at least 90% and most preferably all of the at least two different data sets, in which the same color formulation identification code is stored in each case, also contain information for at least one further parameter, wherein this information about the at least one further parameter is characteristic for the color formulation and is identical in all of the at least two different data sets, wherein the at least one further parameter is preferably selected from the group consisting of resistance of the color formulation to light, to temperature, to gamma rays, to chemicals, to pasteurization, to sterilization, to moisture and any combination of two or more of the aforementioned.

10. The method according to at least one of the preceding claims, **characterized in that** at least some of the data sets also contain information regarding a top coat and/or primer, wherein the hue stored in the relevant data set is that of the color product which is obtained by the color formulation stored in the data set being printed onto the substrate stored in the data set using the application method stored in the data set, and the top coat and/or primer stored in the data set then being applied, and the computer program is configured such that the user, in step b), can specify a top coat and/or primer and a quantity for the top coat and/or primer to be applied.

11. The method according to at least one of the preceding claims, **characterized in that** at least 10%, preferably at least 25%, more preferably at least 50%, even more preferably at least 75%, very particularly preferably at least 90% and most preferably all of the data sets also contain information about at least one of the following characteristics:
i) one or more halftones,
ii) gloss level of the color product,
iii) different gloss levels at different viewing angles of the color product,
iv) haptic properties of the color product,
v) scratch-resistance of the color product,
vi) tear strength of the color product,
vii) tensile strength of the color product,
viii) resistance of the color product to light,
ix) resistance of the color product to temperature,
x) resistance of the color product to gamma rays,
xi) resistance of the color product to chemicals,
xii) resistance of the color product to pasteurization,
xiii) resistance of the color product to sterilization,
xiv) resistance of the color product to moisture,
xv) resistance of the color product to delamination,
xvi) absence of certain ingredients in the color formulation,
xvii) opacity of the color product,
xviii) slip properties of the color product.

12. The method according to claim 11, **characterized in that** at least 10%, preferably at least 50%, particularly preferably at least 80%, more preferably at least 90%, very particularly preferably at least 95% and most preferably all of the data sets contained in the database comprise information about at least two halftones, wherein the information about each of the at least two halftones at least contains information about the relevant hue that the color product has, which is obtained when the color formulation about which information is stored in the corresponding data set is applied to the target substrate as a relevant halftone using the target application method.

13. A data processing device for ascertaining a color formulation which, after application to a specified substrate using a specified application method, results in a color product having a specified hue, wherein the data processing device comprises means for carrying out the method according to claim 1.

## Revendications

1. Procédé de détermination d'une formulation de peinture, laquelle, après l'application, selon un procédé d'application prédéfini, sur un substrat prédéfini, résulte en un produit de peinture présentant une teinte prédéfinie, dans lequel ledit procédé comprend :
a) la fourniture d'une base de données dans laquelle une pluralité d'ensembles de données sont mémorisés, dans lequel
i) au moins une partie de chacun des ensembles de données comprend respectivement au moins des informations concernant une formulation de peinture incluant un code d'identification de formulation de peinture, un substrat, un procédé d'application et la teinte du produit de peinture résultant, après l'application de la formulation de peinture sur le substrat selon le procédé d'application, incluant un code d'identification de teinte,
ii) la base de données comprend, pour au moins une teinte, respectivement au moins deux différents ensembles de données mentionnés en i) comportant respectivement le même code d'identification de teinte, la même teinte du produit de peinture résultant et des informations concernant des formulations de peinture différant les unes des autres, dans lequel le substrat et/ou le procédé d'application de l'au moins un des au moins deux différents ensembles de données diffère du substrat et/ou du procédé d'application d'un autre des au moins deux différents ensembles de données, et
iii) la base de données, pour l'au moins une formulation de peinture, comprend respectivement les au moins deux différents ensembles de données mentionnés en i) comportant respectivement le même code d'identification de formulation de peinture et des informations concernant la même formulation de peinture, le substrat de l'au moins un des au moins deux différents ensembles de données différant du substrat de l'autre des au moins deux différents ensembles de données, et dans lequel la teinte du produit de peinture de l'au moins un des au moins deux différents ensembles de données diffère de la teinte du produit de peinture de l'autre des au moins deux différents ensembles de données,
b) la fourniture d'un programme informatique, lequel utilise la base de données a) et la prédéfinition, d'un procédé d'application cible, d'un substrat cible, ainsi que d'une teinte cible souhaitée pour le produit de peinture obtenu résultante après l'application d'une formulation de peinture sur le substrat cible prédifini selon le procédé d'application cible prédéfini, par un utilisateur dans le programme informatique,
c) la recherche dans la base de données à l'aide dudit programme informatique afin de déterminer si celle-ci contient au moins un ensemble de données dont la formulation de peinture, après l'application sur le substrat cible selon le procédé d'application cible prédéfini dans l'étape b), donne un produit de peinture présentant une teinte, laquelle correspond à la teinte cible ou se diffère de celle-ci d'au plus une tolérance prédéfinie, et
d) l'affichage, si l'au moins un ensemble de données approprié est trouvé dans l'étape c), des informations concernant la formulation de peinture mémorisées
dans l'au moins un ensemble de données,
dans lequel le programme informatique comprend un algorithme de formulation, lequel peut calculer une formulation de peinture, laquelle, après l'application sur le substrat cible prédéfini selon le procédé d'application cible prédéfini, donne la teinte prédéfinie pour le produit de peinture cible à une tolérance maximale prédéfinie, dans lequel le programme informatique est configuré de telle sorte que l'algorithme de formulation calculant la formulation de peinture est mis en oeuvre si aucun ensemble de données approprié n'a été trouvé dans l'étape c), et avant la mise en oeuvre de l'algorithme de formulation calculant la formulation de peinture, des composants appropriés pour la formulation de peinture sont transmis à l'algorithme de formulation par le programme informatique en fonction de la prédéfinition de l'utilisateur, à partir desquels composants seul l'algorithme de formulation calcule la formulation de peinture, et
dans lequel, lorsqu'un utilisateur crée un nouvel ensemble de données dans la base de données, le programme informatique vérifie automatiquement si l'au moins un ensemble de données est déjà contenu ou non pour la formulation de peinture à mémoriser dans la plage de tolérance susmentionnée, dans lequel, si ce n'est pas le cas, le nouvel ensemble de données est créé et un nouveau code d'identification de formulation de peinture prédéfini est mémorisé dans celui-ci, et, si c'est le cas, est en outre vérifié le fait de savoir si l'au moins un ensemble de données contient des informations concernant le même substrat, concernant le même procédé d'application et concernant la même teinte résultante après l'application de la formulation de peinture sur le substrat selon le procédé d'application, dans lequel, si c'est le cas, l'utilisateur reçoit une notification indiquant que l'ensemble de données correspondant est déjà contenu dans la base de données, puis l'ensemble de données à créer n'étant pas créé, et, si ce n'est pas le cas, le même code d'identification de formulation de peinture est mémorisé dans le nouvel ensemble de données à créer, et dans lequel le programme informatique attribue le même code d'identification de teinte aux ensembles de données, lesquels conduisent à des produits de peinture comportant des mêmes teintes dans la plage de tolérance, dans lequel, dans la base de données, deux teintes sont évaluées comme identiques si celles-ci diffèrent l'une de l'autre d'une valeur Delta E d'au plus 0,5, deux teintes sont évaluées comme différentes si celles-ci diffèrent davantage l'une de l'autre, deux formulations de peinture sont évaluées comme identiques si celles-ci présentent les mêmes constituants colorants et diffèrent l'une de l'autre d'au plus 1 % par constituant colorant en termes de quantités des constituants colorants individuels, et deux formulations de peinture sont évaluées comme différentes si celles-ci diffèrent davantage l'une de l'autre.

2. Procédé selon la revendication 1, **caractérisé en ce que**, dans la base de données, deux teintes sont évaluées comme identiques si elles diffèrent l'une de l'autre d'une valeur ΔE₀₀ d'au plus 0,5 et d'une valeur dH* d'au plus 0,5 et de préférence encore d'une valeur ΔE₀₀ d'au plus 0,2 et d'une valeur dH* d'au plus 0,2, et deux teintes sont évaluées comme différentes si elles diffèrent l'une de l'autre d'une valeur ΔE₀₀ supérieure à 0,5.

3. Procédé selon la revendication 1 ou 2, **caractérisé en ce que** la base de données comprend respectivement les au moins deux différents ensembles de données pour au moins 10 %, plus préférentiellement, pour au moins 20 %, de préférence encore pour au moins 50 %, de manière particulièrement préférée pour au moins 70 %, mieux encore pour au moins 90 % et idéalement pour toutes les teintes, lesdits ensembles de données comprenant respectivement le même code d'identification de teinte et des informations concernant des formulations de peinture différant les unes des autres, concernant un substrat, ainsi que concernant un procédé d'application, dans lequel le substrat et/ou le procédé d'application de chacun des au moins deux différents ensembles de données diffèrent du substrat et/ou du procédé d'application des autres des au moins deux différents ensembles de données, dans lequel pour chacune des formulations de peinture différant les unes des autres des au moins deux différents ensembles de données, respectivement un produit de peinture présentant la même teinte est obtenu après l'application de la formulation de peinture respective sur le substrat mémorisé dans l'ensemble de données respectif selon le procédé d'application mémorisé dans l'ensemble de données respectif.

4. Procédé selon la revendication 3, **caractérisé en ce que** la base de données, pour l'au moins une teinte, comprend respectivement au moins quatre différents ensembles de données, plus préférentiellement, au moins six différents ensembles de données, de préférence encore au moins dix différents ensembles de données et mieux encore au moins vingt différents ensembles de données, lesquels comprennent respectivement le même code d'identification de teinte et des informations concernant des formulations de peinture différant les unes des autres, concernant un substrat, ainsi que concernant un procédé d'application, dans lequel le substrat et/ou le procédé d'application de chacun des au moins quatre différents ensembles de données diffèrent du substrat et/ou du procédé d'application des autres des au moins quatre différents ensembles de données, dans lequel pour chacune des formulations de peinture différant les unes des autres des au moins quatre différents ensembles de données, respectivement un produit de peinture présentant la même teinte est obtenu après l'application de la formulation de peinture respective sur le substrat mémorisé dans l'ensemble de données respectif selon le procédé d'application mémorisé dans l'ensemble de données respectif.

5. Procédé selon au moins l'une quelconque des revendications précédentes, **caractérisé en ce que**, dans chaque ensemble de données, pour lequel un produit de peinture présentant une teinte différente de celle obtenue pour l'au moins un autre ensemble de données est obtenu après l'application de la formulation de peinture mémorisée dans l'ensemble de données respectif sur le substrat mémorisé dans l'ensemble de données respectif selon le procédé d'application mémorisé dans l'ensemble de données respectif, un code d'identification de teinte différent de celui dans tous les autres de l'au moins un autre ensemble de données est mémorisé.

6. Procédé selon au moins l'une quelconque des revendications précédentes, **caractérisé en ce que** le programme informatique comprend un algorithme d'essai, lequel peut simuler une teinte, laquelle, après l'impression de la simulation à l'aide d'un ordinateur par l'intermédiaire d'une imprimante à papier d'essai sur un substrat à papier d'essai, résulte en la même teinte que l'application de la formulation de peinture trouvée dans l'étape c) sur le substrat cible prédéfini dans l'étape b) selon le procédé d'application cible prédéfini dans l'étape b), dans lequel l'imprimante à papier d'essai est une imprimante à jet d'encre ou une imprimante laser.

7. Procédé selon au moins l'une quelconque des revendications précédentes, **caractérisé en ce que** la base de données comprend respectivement au moins deux différents ensembles de données pour au moins 10 %, plus préférentiellement, pour au moins 20 %, de préférence encore pour au moins 50 %, de manière particulièrement préférée pour au moins 70 %, mieux encore pour au moins au moins 90 % et idéalement pour toutes les formulations de peinture, lesquels ensembles de données comprennent respectivement le même code d'identification de formulation de peinture et des informations concernant la même formulation de peinture, concernant un substrat, concernant un procédé d'application, ainsi que concernant une teinte résultante pour le produit de peinture après l'application de la formulation de peinture mémorisée dans l'ensemble de données respectif sur le substrat mémorisé dans l'ensemble de données respectif selon le procédé d'application mémorisé dans l'ensemble de données respectif, dans lequel le substrat de chacun des au moins deux différents ensembles de données diffèrent du substrat des autres des au moins deux différents ensembles de données, et dans lequel, après l'application de la formulation de peinture respective sur le substrat mémorisé dans l'ensemble de données respectif selon le procédé d'application mémorisé dans l'ensemble de données respectif, résulte respesctivement un produit de peinture, dans lequel la teinte du produit de peinture de chacun des au moins deux différents ensembles de données diffère de la teinte des produits de peinture de tous les autres des au moins deux différents ensembles de données.

8. Procédé selon la revendication 7, **caractérisé en ce que** la base de données, pour l'au moins une formulation de peinture, comprend respectivement au moins quatre différents ensembles de données, plus préférentiellement, au moins six différents ensembles de données, de préférence encore au moins dix différents ensembles de données et mieux encore au moins vingt différents ensembles de données, lesquels comprennent respectivement le même code d'identification de formulation de peinture et des informations concernant la même formulation de peinture, concernant un substrat, concernant un procédé d'application, ainsi que concernant une teinte obtenue pour le produit de peinture après l'application de la formulation de peinture mémorisée dans l'ensemble de données respectif sur le substrat mémorisé dans l'ensemble de données respectif selon le procédé d'application mémorisé dans l'ensemble de données respectif, dans lequel le substrat ou le procédé d'application de chacun des au moins quatre différents ensembles de données diffère du substrat des autres des au moins quatre différents ensembles de données, et dans lequel, après l'application de la formulation de peinture respective sur le substrat mémorisé dans l'ensemble de données respectif selon le procédé d'application mémorisé dans l'ensemble de données respectif, résulte respesctivement un produit de peinture, dans lequel la teinte du produit de peinture de chacun des au moins quatre différents ensembles de données diffère de la teinte des produits de peinture de tous les autres des au moins quatre différents ensembles de données.

9. Procédé selon au moins l'une quelconque des revendications précédentes, **caractérisé en ce qu'**au moins 10 %, plus préférentiellement, au moins 25 %, de préférence encore au moins 50 %, de manière particulièrement préférée au moins 75 %, mieux encore au moins 90 % et idéalement tous les au moins deux différents ensembles de données, dans lesquels respectivement le même code d'identification de formulation de peinture est mémorisé, contiennent également des informations concernant au moins un paramètre supplémentaire, dans lequel lesdites informations concernant l'au moins un paramètre supplémentaire sont caractéristiques de la formulation de peinture et sont identiques dans tous les au moins deux différents ensembles de données, dans lequel l'au moins un paramètre supplémentaire est de préférence choisi dans le groupe constitué par la résistance de la formulation de peinture à la lumière, à la température, aux rayons gamma, aux produits chimiques, à la pasteurisation, à la stérilisation, à l'humidité et à toute combinaison des au moins deux des éléments susmentionnés.

10. Procédé selon au moins l'une quelconque des revendications précédentes, **caractérisé en ce qu'**au moins une partie des ensembles de données contient également des indications concernant une couche de finition et/ou un apprêt, dans lequel la teinte mémorisée dans l'ensemble de données respectif est celle du produit de peinture, lequel est obtenu par impression de la formulation de peinture mémorisée dans l'ensemble de données sur le substrat mémorisé dans l'ensemble de données selon le procédé d'application mémorisé dans l'ensemble de données, puis par application de la couche de finition et/ou l'apprêt mémorisés dans l'ensemble de données, et le programme informatique est configuré de telle sorte que l'utilisateur peut prédéfinir dans l'étape b) une couche de finition et/ou un apprêt, ainsi qu'une quantité pour la couche de finition et/ou l'apprêt à appliquer.

11. Procédé selon au moins l'une quelconque des revendications précédentes, **caractérisé en ce qu'**au moins 10 %, plus préférentiellement, au moins 25 %, de préférence encore au moins 50 %, de manière particulièrement préférée au moins 75 %, mieux encore au moins 90 % et idéalement tous les ensembles de données contiennent également des informations concernant au moins l'une des caractéristiques suivantes :
i) au moins une demi-teinte,
ii) niveau de brillance du produit de peinture,
iii) différents niveaux de brillance à différents angles de vue du produit de peinture,
iv) propriétés haptiques du produit de peinture,
v) résistance aux rayures du produit de peinture,
vi) résistance à la déchirure du produit de peinture,
vii) résistance à la traction du produit de peinture,
viii) résistance du produit de peinture à la lumière,
ix) résistance du produit de peinture à la température,
x) résistance du produit de peinture aux rayons gamma,
xi) résistance du produit de peinture aux produits chimiques,
xii) résistance du produit de peinture à la pasteurisation,
xiii) résistance du produit de peinture à la stérilisation,
xiv) résistance du produit de peinture à l'humidité,
xv) résistance du produit de peinture au délaminage,
xvi) absence d'ingrédients déterminés dans la formulation de peinture,
xvii) opacité du produit de peinture,
xviii) propriétés de glissement du produit de peinture.

12. Procédé selon la revendication 11, **caractérisé en ce qu'**au moins 10 %, plus préférentiellement, au moins 50 %, de préférence encore au moins 80 %, de manière particulièrement préférée au moins 90 %, mieux encore au moins 95 % et idéalement tous les ensembles de données contenus dans la base de données comprennent des informations concernant au moins deux demi-teintes, dans lequel les informations concernant chacune des au moins deux demi-teintes comportent au moins des informations concernant la teinte respective, laquelle présente le produit de peinture respectif, lequel est obtenu lorsque la formulation de peinture, dont les informations sont mémorisées dans l'ensemble de données correspondant, est appliquée sur le substrat cible en tant que demi-teinte respective selon le procédé d'application cible.

13. Dispositif de traitement des données permettant de déterminer une formulation de peinture, laquelle, après l'application sur un substrat prédéfini selon un procédé d'application prédéfini, résulte en un produit de peinture présentant une teinte prédéfinie, dans lequel le dispositif de traitement des données comprend un moyen permettant de mettre en oeuvre le procédé selon la revendication 1.
